# EUROPEAN PATENT SPECIFICATION

(11) **EP 0 590 913 B1**
(45) Date of publication and mention of the grant of the patent: **17.12.1997**
(21) Application number: 93307643.2
(22) Date of filing: 27.09.1993
(51) Int. Cl.: G03H 1/08, G03H 1/26

(54) **Stereoscopic display method and apparatus**
Stereoskopisches Anzeigeverfahren und Vorrichtung dazu
Méthode et dispositif d'affichage stéréoscopique

(30) Priority: 30.09.1992 JP 260921/92
(43) Date of publication of application: 06.04.1994
(73) Proprietor: FUJITSU LIMITED, Kawasaki-shi, Kanagawa 211 (JP)
(72) Inventor: Aritake, Hirokazu, c/o FUJITSU Limited, Kawasaki-shi, Kanagawa 211 (JP); Kato, Masayuki, c/o FUJITSU Limited, Kawasaki-shi, Kanagawa 211 (JP); Ishimoto, Manabu, c/o FUJITSU Limited, Kawasaki-shi, Kanagawa 211 (JP); Sato, Noriko, c/o FUJITSU Limited, Kawasaki-shi, Kanagawa 211 (JP)
(74) Representative: Godsill, John Kenneth

(56) References cited:
- APPLIED OPTICS vol. 15, no. 11 , November 1976 , NEW YORK US pages 2722 - 2729 TOYOHIKO YATAGAI 'STEREOSCOPIC APPROACH TO 3-D DISPLAY USING COMPUTER-GENERATED HOLOGRAMS'
- OPTICS COMMUNICATIONS vol. 82, no. 1/2 , 1 April 1991 , AMSTERDAM NL pages 6 - 11 P.W. MCOWAN ET AL. 'THREE-DIMENSIONAL STEREOSCOPIC DISPLAY USING RAY TRACED COMPUTER GENERATED HOLOGRAMS'
- IEEE COMPUTER GRAPHICS AND APPLICATIONS vol. 12, no. 1 , January 1992 , NEW YORK US pages 37 - 46 KENNETH HAINES ET AL. 'COMPUTER GRAPHICS FOR HOLOGRAPHY'
- OPTICS COMMUNICATIONS vol. 80, no. 1 , December 1990 , AMSTERDAM NL pages 7 - 12 DER-KUAN KANG ET AL. 'IMAGE PROCESSING TECHNIQUE FOR ARBITRARY IMAGE POSITIONING IN HOLOGRAPHIC STEREOGRAM'
- JOURNAL OF THE OPTICAL SOCIETY OF AMERICA - A vol. 9, no. 7 , July 1992 , NEW YORK US pages 1200 - 1205 MASAHIRO YAMAGUCHI ET AL. 'AUTOMATIC RECORDING METHOD FOR HOLOGRAPHIC THREE-DIMENSIONAL ANIMATION'
- PROCEEDINGS OF THE SPIE vol. 812 , 1987 , BELLINGHAM, (US) pages 120 - 127 ELMAR SCHULZE 'REAL-TIME HOLOGRAPHIC 3D IMAGING BASED ON MULTIPLEXING TECHNIQUES AND OPTOELECTRONIC HOLOGRAMS'
- PROCEEDINGS OF THE SPIE vol. 1256 , 1990 , BELLINGHAM, (US) pages 73 - 82 STEVEN P. WILLIAMS ET AL. 'NEW COMPUTATIONAL CONTROL TECHNIQUES AND INCREASED UNDERSTANDING FOR STEREO 3-D DISPLAYS'

## Description

This invention relates to the display of stereoscopic images of moving three-dimensional objects by means of computer-generated holograms.

One conventional stereoscopic display method is of the double-eye type, for example using special glasses. With this method, a stereoscopic impression is obtained, either by vergence of both eyes or parallax of both eyes, by allowing different images to be seen by the right and left eyes.

There is also a Lenticular method of the multi-eye type which is an extension of methods of the double-eye type. The principle behind stereoscopic observation in the Lenticular method is similar to that of the double-eye type.

According to such conventional stereoscopic display methods, when an observer moves his head to the right or left, no change is perceived in a three-dimensional image being observed (i.e. no kinetic parallax). The observed image thus appears unnatural.

This problem is reduced in a holographic stereogram. With a holographic stereogram, a two-dimensional video image including a horizontal parallax component can be recorded as a succession of elongate slit-shaped segment holograms having their longitudinal axes arranged vertically, the segment holograms being arrayed alongside one another in the horizontal direction. With such an arrangement, a more natural stereoscopic feeling is retained when the observer moves his head to the right and left. Holographic stereograms which include a parallax component in the vertical direction are also known.

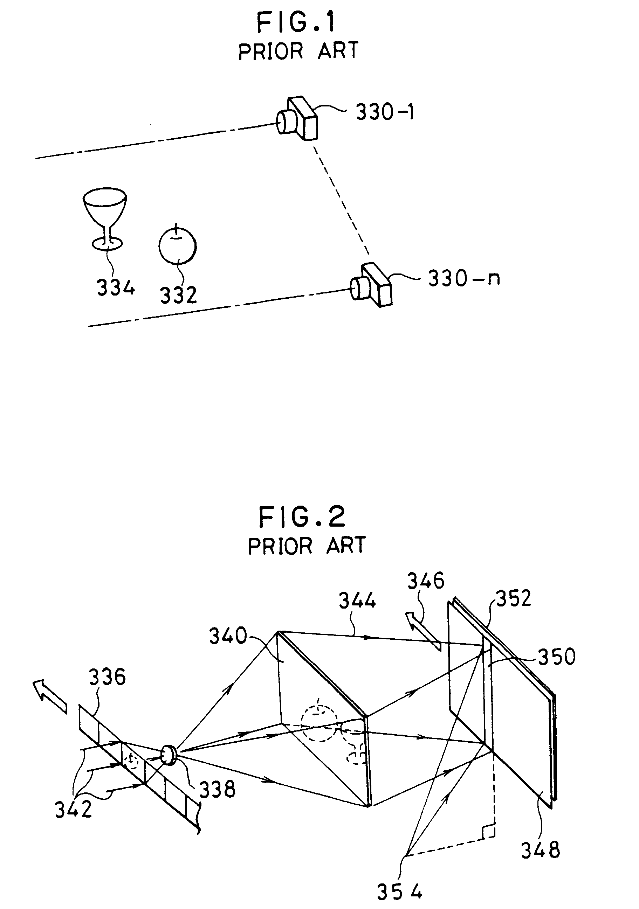

A conventional holographic stereogram with horizontal parallax will now be described. As shown in Fig. 1, objects 332 and 334 are photographed while changing the position of a camera through positions 330-1 to 330-n. As shown in Fig. 2, a laser beam 342 irradiates a film 336 obtained by the photographic operation of Fig. 1. The light transmitted through the film 336 is projected onto a diffusion plate 340 through a lens 338 so that an object light beam 344 irradiates a hologram dry plate 352. A slit 350 in a slit plate 348 is located in front of the hologram dry plate 352 in correspondence to the photographing position concerned. An interference fringe (phase distribution) is produced, by interference with a reference light beam 354, and recorded on the plate 352.

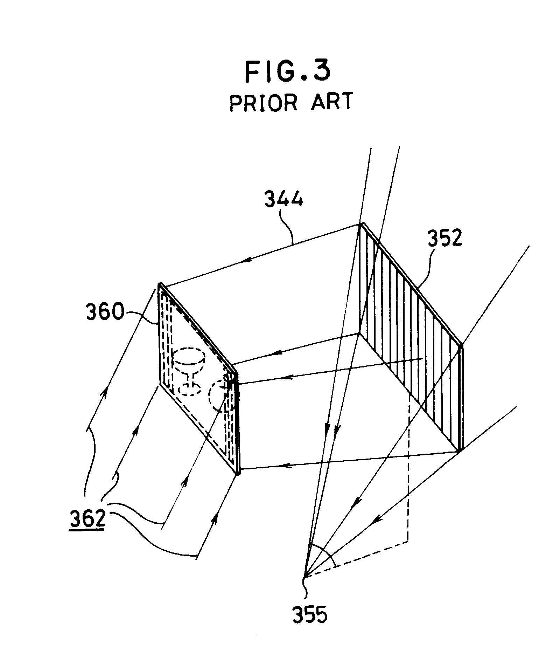

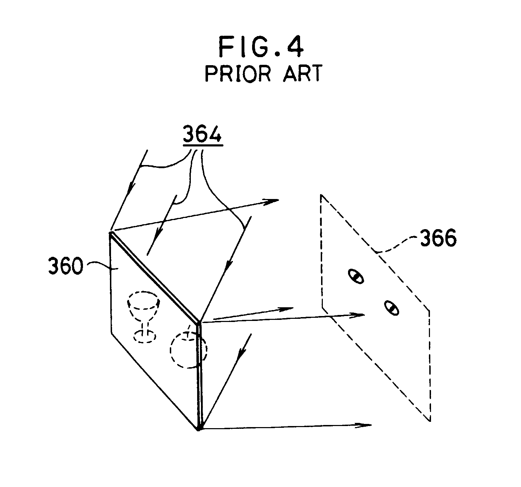

Fig. 3 illustrates a known method of forming an image hologram. A laser beam provides reproduction light which irradiates the hologram dry plate 352 formed in Fig. 2 so as to converge at a virtual reproduction light source 355. The laser beam undergoes wavefront conversion into an equivalent of the object light beam 344 at the hologram dry plate 352. A second hologram dry plate is provided at the position at which the image is displayed by the object light beam 344. A beam of reference light 362 irradiates the second dry plate. Exposure of the second dry plate in this way serves to form an image hologram 360. As shown in Fig. 4, by directing a beam of reproduction light 364 onto the image hologram 360, a wavefront is generated which allows a three-dimensional image to be perceived when observed from a viewing region 366.

When a moving image (i.e. an image which changes with time) is to be stereoscopically displayed by such a conventional holographic stereogram, the phase distribution recorded on the hologram dry plate 352 shown in Fig. 2 is obtained by calculation and a display apparatus, such as a liquid crystal device or the like, is controlled so as to physically reproduce the calculated phase distribution. The reproduced phase distribution constitutes a hologram on the display apparatus, so that the beam of reproduction light is converted into the wavefront of the image corresponding to the phase distribution loaded onto the display apparatus at that time.

However, when a moving three-dimensional image is displayed in this way, the observer becomes tired. This is because the position of the image to be displayed changes with time, whereas in the holographic stereogram the position at which a two-dimensional image is formed (hereinafter referred to as the "virtual screen" or "projection plane" position) remains fixed for the purposes of successive phase distribution calculations. Therefore, when the position of a three-dimensional object in the image changes, the virtual screen position at which the two-dimensional image is produced remains static. On the one hand, the angle of vergence of the eyes of the observer changes in accordance with the temporally varying position of an object in the image. On the other hand, the image is fixed to the virtual screen position. Since the focal point for an observer is set to the virtual screen position, the observer is sensitive to a contradiction between the focal point and the vergence angle. This causes a disturbance in the ecological feedback and tires the observer.

Moreover, it is known that there is a tendency for the allowable range of distances between the screen and a three-dimensional image to be narrowed when the three-dimensional image is located near the screen (Masuda, "3-dimensional Display", issued by Sangyo Tosho Co., Ltd., pages 42 to 44, May 25, 1990). Consequently, when viewing a moving image in which an object being displayed at a virtual screen position relatively close to the observer is relatively distant from that position, the level of fatigue of the observer is further increased.

According to a first aspect of the present invention there is provided a method of producing computer-generated holograms for use in displaying a stereoscopic image of a three-dimensional object which moves so that its distance from a hologram formation surface varies, the method comprising, for each in turn of a succession of different instants in time: computing a three-dimensional coordinate representation of the object as positioned at the instant concerned; defining a projection plane at a location which varies with the object position in such a way that the distance between the object and the projection plane remains less than a preset limiting value; computing a series of two-dimensional perspective images of the object as viewed respectively from an array of different viewpoints, each such image representing the object as it would be seen projected onto the projection plane defined for the instant concerned; computing a set of phase holograms representative respectively, at the said hologram formation surface, of the perspective images of the series computed for the instant concerned; and producing a composite hologram incorporating respective physical reproductions of the phase holograms of the set computed for the instant concerned, which reproductions are arrayed similarly to their respectively corresponding different viewpoints so that the composite hologram can be irradiated with a light beam to generate the desired stereoscopic image of the object as positioned at the instant concerned.

According to a second aspect of the present invention there is provided a method of producing computer-generated holograms for use in displaying a stereoscopic image of a plurality of three-dimensional objects which move so that their respective distances from a hologram formation surface vary, the method comprising, for each in turn of a succession of different instants: computing respective three-dimensional coordinate representations of the said objects as positioned at the instant concerned; defining for each object individually a projection plane at a location which varies with the object position in such a way that the distance between the object concerned and its individual projection plane remains less than a preset limiting value; computing a series of composite two-dimensional perspective images of the said objects as viewed respectively from an array of different viewpoints, each such image representing each of the objects as it would be seen projected onto the projection plane defined individually therefor in respect of the instant concerned; computing a set of phase holograms representative respectively, at the said hologram formation surface, of the composite perspective images of the series computed for the instant concerned; and producing a composite hologram incorporating respective physical reproductions of the phase holograms of the set computed for the instant concerned, which reproductions are arrayed similarly to their respectively corresponding different viewpoints so that the composite hologram can be irradiated with a light beam to generate the desired stereoscopic image of the objects as positioned at the instant concerned.

According to a third aspect of the present invention there is provided an apparatus for producing computer-generated holograms for use in displaying a stereoscopic image of a three-dimensional object which moves so that its distance from a hologram formation surface varies, the apparatus comprising: coordinate-computing means for computing, for each in turn of a succession of different instants in time, a three-dimensional coordinate representation of the object as positioned at the instant concerned; projection-plane defining means for defining, for each in turn of the said different instants, a projection plane at a location which varies with the object position in such a way that the distance between the object and the projection plane remains less than a preset limiting value; image-computing means for computing, for each in turn of the said different instants, a series of two-dimensional perspective images of the object as viewed respectively from an array of preselected different viewpoints, each such image representing the object as it would be seen projected onto the projection plane defined for the instant concerned; hologram-computing means for computing, for each in turn of the said different instants, a set of phase holograms representative respectively, at the said hologram formation surface, of the perspective images of the series computed for the instant concerned; and hologram-formation means for producing, for each in turn of the said different instants, a composite hologram incorporating respective physical reproductions of the phase holograms of the set computed for the instant concerned, which reproductions are arrayed similarly to their respectively corresponding different viewpoints so that the composite hologram can be irradiated with a light beam to generate the desired stereoscopic image of the object as positioned at the instant concerned.

According to a fourth aspect of the present invention there is provided an apparatus for producing computer-generated holograms for use in displaying a stereoscopic image of a plurality of three-dimensional objects which move so that their respective distances from a hologram formation surface vary, the apparatus comprising: coordinate-computing means for computing, for each in turn of a succession of different instants in time, respective three-dimensional coordinate representations of the objects as positioned at the instant concerned; projection-plane defining means for defining, for each object individually as positioned at each in turn of the said different instants, a projection plane at a location which varies with the object position in such a way that the distance between the object concerned and its individual projection plane remains less than a preset limiting value; image-computing means for computing, for each in turn of the said different instants, a series of composite two-dimensional perspective images of the said objects as viewed respectively from an array of preselected different viewpoints, each such image representing each of the said objects as it would be seen projected onto the projection plane defined individually therefor in respect of the instant concerned; hologram-computing means for computing, for each in turn of the said different instants, a set of phase holograms representative respectively, at the said hologram formation surface, of the composite perspective images of the series computed for the instant concerned; and hologram-formation means for producing, for each in turn of the said different instants, a composite hologram incorporating respective physical reproductions of the phase holograms of the set computed for the instant concerned, which reproductions are arrayed similarly to their respectively corresponding different viewpoints so that the composite hologram can be irradiated with a light beam to generate the desired stereoscopic image of the objects as positioned at the instant concerned.

The projection plane (virtual screen plane) can be arranged to contain the centre of gravity of the computed three-dimensional coordinates representation of the object being displayed. When a plurality of objects (targets) exist, the virtual screen position, which changes with time, can be set separately for each object, or alternatively a single virtual screen position which changes with time can be set for a plurality of separate bodies treated as one composite target object.

In use of an embodiment of the invention, the position of a moving object is detected and the position of an associated virtual screen plane (projection plane) is adjusted so that the distance between it and the moving object remains within an allowable limit such that fatigue of an observer is reduced.

For a better understanding of the invention, and to show how the same may be carried into effect, reference will now be made, by way of example, to the accompanying drawings, wherein:
Fig. 1 is a perspective diagram showing positions at which a target is photographed in order to form of a holographic stereogram;
Fig. 2 is a perspective diagram illustrating formation of a hologram by using photographs obtained in accordance with Fig. 1;
Fig. 3 is a perspective diagram illustrating formation of an image hologram by means of a hologram formed in accordance with Fig. 2;
Fig. 4 is a perspective diagram illustrating how a stereoscopic display can be produced from the image hologram of Fig. 3;
Fig. 5 is a block diagram illustrating an embodiment of the present invention;
Fig. 6 is a flowchart illustrating an embodiment of the invention;
Fig. 7 is a flowchart showing details of step S3 of Fig. 6;
Fig. 8 shows diagrammatically a plan view of a conventional relationship between a virtual screen position and the position of a moving object;
Fig. 9 shows a diagrammatic plan view of a possible relationship between a virtual screen position and the position of a moving object in use of an embodiment of the invention;
Fig. 10 is a graph showing variation of an allowable limit for the positioning of a projection plane (virtual screen) as a function of the distance from a viewing point to the object position;
Fig. 11 is a diagram illustrating how a virtual screen position may be set when a plurality of objects is treated as a single target;
Fig. 12 is a diagram illustrating how an individual virtual screen position may be set for each one of a plurality of objects;
Fig. 13 is a perspective diagram illustrating zonal division of a plurality of objects;
Fig. 14 shows a plan view corresponding to Fig. 13 and illustrating the setting of an individual virtual screen (projection plane) for each of the zones of Fig. 13;
Fig. 15 is a perspective diagram illustrating the formation of two-dimensional projection data for each of the zones shown in Fig. 14;
Fig. 16 is a perspective diagram illustrating zonal division of a single elongate object;
Fig. 17 shows a diagrammatic plan view corresponding to Fig. 16 and illustrating the setting of an individual virtual screen for each of the zones of Fig. 16;
Fig. 18 is a perspective diagram illustrating the formation of two-dimensional projection data for each of the zones shown in Fig. 17;
Fig. 19 is a perspective diagram showing an inclined virtual screen set for an elongate object;
Fig. 20 is a perspective diagram illustrating the formation of two-dimensional projection data for objects shown in Fig. 19;
Fig. 21 is a perspective diagram illustrating principles of calculation of a phase distribution for a Fresnel-type hologram;
Fig. 22 is a schematic diagram illustrating principles of formation of an image-type hologram;
Fig. 23 is a schematic diagram illustrating restriction of the calculation range of the phase distribution for an image-type hologram;
Fig. 24 is a perspective diagram illustrating details of the calculation of the phase distribution of a hologram having parallax in both the horizontal and the vertical direction;
Fig. 25 is a perspective diagram illustrating details of the calculation of the phase distribution of an image hologram;
Fig. 26 shows a side view corresponding to Fig. 25, and illustrates a calculation detail regarding the image hologram of Fig. 25;
Fig. 27 is a perspective diagram illustrating details of the calculation of the phase distribution of a hologram having parallax in the horizontal direction;
Fig. 28 is a perspective diagram illustrating details of the calculation of the phase distribution of a hologram in which the optical viewing axis remains horizontal while the position of the viewpoint changes;
Fig. 29 is a perspective diagram illustrating details of the calculation of the phase distribution of a hologram in which the optical viewing axis remains fixed on one point of an object while the position of the viewpoint changes;
Fig. 30 is a perspective diagram showing how a two-dimensional image may be divided for the purposes of calculating the phase distribution of a hologram;
Fig. 31 is a schematic diagram of a stereoscopic display device for use in reproducing a three-dimensional image from an image hologram calculated on the basis of divided two-dimensional images;
Fig. 32 is a perspective diagram for use in explaining how a reduction in the amount of calculation can be achieved when calculating a phase distribution;
Fig. 33 is a side-view diagram for use in explaining another way of reducing the amount of calculation required to calculate a phase distribution;
Fig. 34 is a perspective diagram showing a stereoscopic display apparatus;
Fig. 35 is a schematic diagram showing a sectioned view of the apparatus of Fig. 34;
Fig. 36 is a schematic diagram showing a section through a liquid crystal display panel device of the transmission type, used as a spatial light modulation apparatus;
Fig. 37 is a diagram illustrating phase modulation of reproduction light with respect to three liquid crystal cells of the device shown in Fig. 36;
Fig. 38 is a schematic sectional diagram of another stereoscopic display apparatus, using a spatial light modulation apparatus of the reflection type;
Fig. 39 is a sectional diagram illustrating operation of the reflection-type spatial light modulation apparatus shown in Fig. 38;
Fig. 40 is a schematic sectional diagram of a stereoscopic display apparatus using a spatial light modulation apparatus of the optical writing type;
Fig. 41 is a schematic diagram showing a section through the optical writing type spatial light modulation apparatus of Fig. 40;
Fig. 42 is a schematic perspective diagram of a stereoscopic display apparatus using a magnifying screen;
Fig. 43 is a schematic perspective diagram of a stereoscopic display apparatus using a spatial light modulation apparatus having integrated therewith a refractive body for preventing transmission of zeroth order light;
Fig. 44 is a schematic diagram showing a section through the apparatus of Fig. 40;
Fig. 45 is a schematic diagram of a stereoscopic display apparatus for providing a colour stereoscopic display using two colour components;
Fig. 46 is a schematic diagram of a stereoscopic display apparatus for providing a colour stereoscopic display using three colour components;
Fig. 47 is a timing chart relating to the time-divisional synthesis and display of the colour components in the apparatus of Fig. 46; and
Fig. 48 is a timing chart relating to positional division, and simultaneous synthesis and display, of the colour components in the apparatus of Fig. 46.

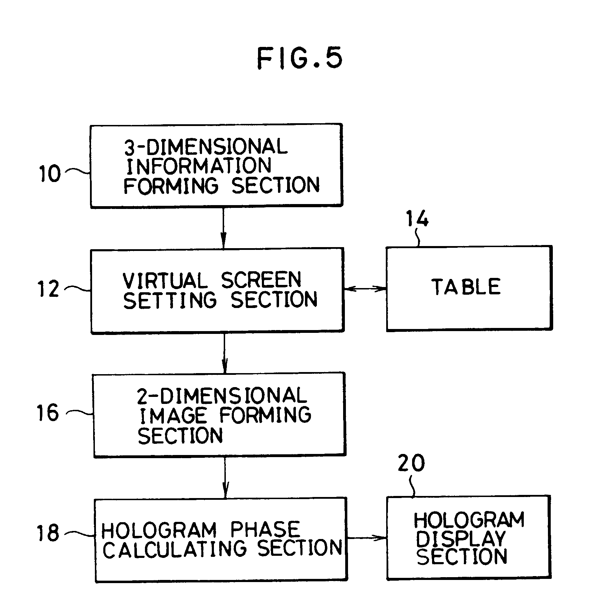

Fig. 5 shows a stereoscopic display apparatus in which, for each in turn of a succession of different instants in time, a three-dimensional information forming section 10 forms a three-dimensional coordinate representation of a target to be stereoscopically displayed, using a CAD system or the like. A virtual screen setting section 12 sets a projection plane position for the instant concerned. Information relating to the optimum setting of the projection plane position is stored in a table 14. A two-dimensional image forming section 16 computes a series of two-dimensional perspective images as projected from an array of predetermined different viewpoints onto the plane set by the virtual screen setting section 12. A hologram phase calculating section 18 computes the phase distributions of a set of holograms representative respectively of the two-dimensional images of the series computed by the two-dimensional image forming section 16, and also computes a composite hologram incorporating the holograms of that set. A hologram display section 20 expresses (reproduces in physical form) the phase distribution constituting that composite hologram and, by wavefront conversion, produces therefrom the desired display of a three-dimensional image.

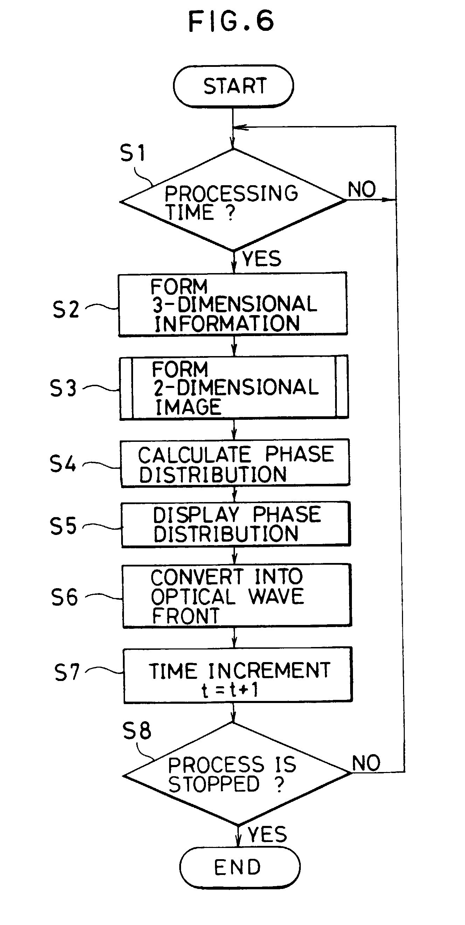

The flowchart of Fig. 6 shows a processing procedure used in an embodiment of the invention. First, in step S1, a check is made to see if a predetermined processing time has come or not. If YES, step S2 follows and three-dimensional coordinate data representing an object structure or the like to be displayed is formed. In step S3, two-dimensional images are computed from the three-dimensional image information.

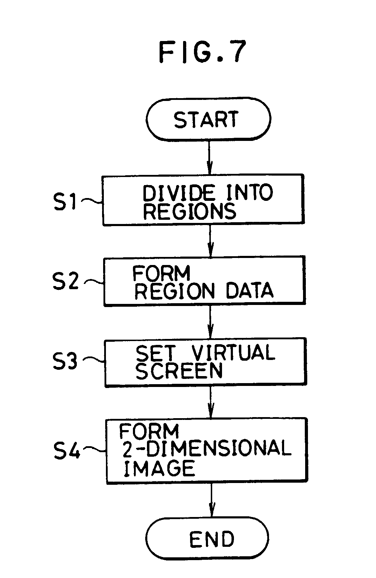

The formation of the two-dimensional images in this step is shown in more detail in the flowchart of Fig. 7. In the process of computing the two-dimensional images as shown in Fig. 7, the three-dimensional image information is first sub-divided into regions, one for each object or each group of objects, in sub-step S1. In sub-step S2, three-dimensional image data is formed for each of these regions. In sub-step S3, a projection plane (virtual screen) is defined with respect to the three-dimensional image data of each region. In sub-step S4, a three-dimensional image is effectively projected onto each projection plane so as to form two-dimensional images. The details of the setting of the projection plane in the two-dimensional image forming process will be explained in more detail below.

Referring once more to Fig. 6, after the two-dimensional images have been formed in step S3, a composite phase distribution is computed in step S4. This phase distribution can be calculated on the basis of a plurality of two-dimensional images having parallax in both the horizontal and vertical directions. Alternatively, the phase distribution can be calculated on the basis of a plurality of two-dimensional images having parallax in only the horizontal direction. Further, the two-dimensional image can be divided up into regions and the phase distribution calculated for each of these regions. These operations will be described in more detail below.

After completion of the calculation of the phase distribution in step S4, a liquid crystal device or the like is driven to load the calculated phase distribution onto the display device in step S5.

In step S6, a reproduction light beam is directed onto the liquid crystal device on which the phase distribution has been loaded, so as to generate the optical wavefront for displaying the desired image.

In step S7, the time t is increased by a predetermined time unit increment.

In step S8, a check is made to see if the process is to be stopped or not.

If NO, the processing routine is returned to step S1, and the processing time is again discriminated.

The calculation of the phase distribution for the next processing instant and the display of the corresponding image are then executed. An acceptably smooth stereoscopic display of a moving image is achievable by executing the time-dependent processes in Fig. 6 at intervals of 1/30 second. The invention is not limited to the display of a moving image at each one of a succession of regularly spaced time instants, but can also be applied to different cases where the display position of the three-dimensional image changes with the elapse of time.

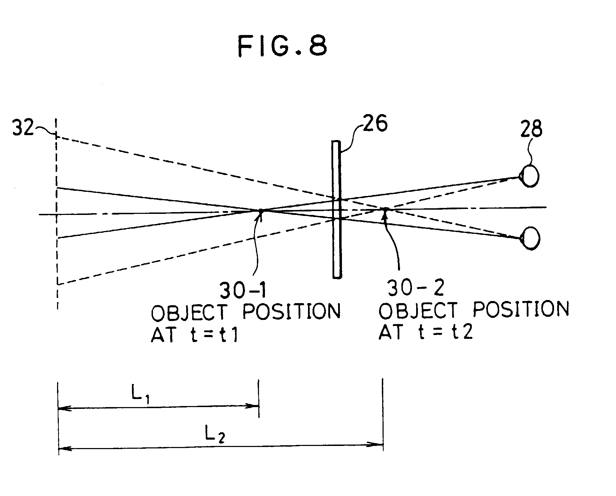

The setting of a projection plane (virtual screen) will now be described, first in terms of a conventional procedure. Fig. 8 shows the relation between object position and projection plane position for a conventional holographic stereogram. The viewpoint of an observer 28 is located to the right of a holographic stereogram 26. In this conventional procedure, the position of the projection plane 32 is kept fixed. The movement of an object from a position 30-1, relatively distant from the observer, to a position 30-2, relatively close to the observer, over a time interval from time t = t₁ to time t = t₂ will now be considered. The vergence angle of the eyes of the observer 28 is relatively small for the distant object position 30-1 and relatively large for the near object position 30-2. However, the position of the projection phase 32 onto which the observer's eyes are focused is fixed. Therefore, for the object position 30-2 that is the more remote from the projection plane 32, an ecological feedback operation causes the fatigue for the observer trying to set the vergence angle of the eyes to the object position 30-2 whilst, at the same time, trying to set the focal point of the eyes to the projection plane position 32.

Thus, with this conventional procedure, when the distance from the fixed projection plane 32 to the object position changes by a relatively large amount, e.g. from L₁ to L₂ as the object moves from position 30-1 to 30-2, during the display of a moving image, an observer experiences considerable fatigue.

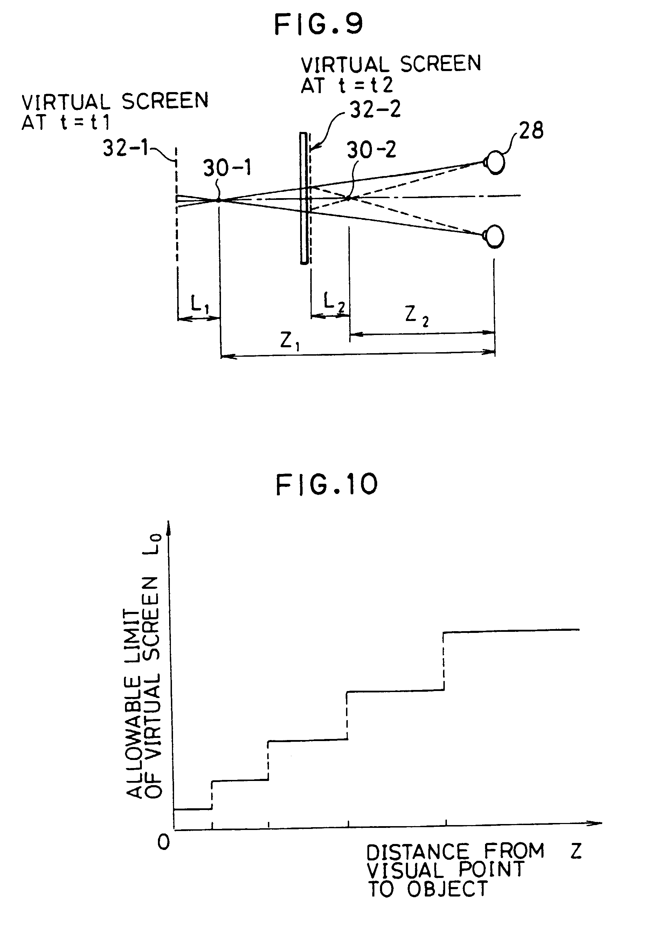

By contrast, use of an embodiment of the invention can serve to reduce viewer fatigue by moving the projection plane (virtual screen) as the object moves, as is explained below with reference to Fig. 9 which depicts how the virtual screen is moved from position 32-1 to 32-2 as the object moves from object position 30-1 to 30-2. When the object is at a position 30-1 at time t = t₁, the virtual screen is set to a position 32-1 at a distance L₁ from the object, this distance being selected such that the observer feels no significant fatigue, even when focal adjustment is executed in accordance with the vergence angle. When the object then moves to a position 30-2, being located there at time t = t₂, the virtual screen position is altered, being set to a position 32-2 at a distance L₂ from the object, this distance being selected such that the observer remains substantially free of fatigue, even when focal adjustment is executed in accordance with the vergence angle associated with the new object position 30-2.

There are functional restrictions which relate the distances L₁ and L₂, from the virtual screen positions 32-1 and 32-2 to the object positions 30-1 and 30-2 respectively, to the distances Z₁ and Z₂ from the viewpoint of the observer 28 to these respective object positions. Generally, when the distance Z from the viewpoint of the observer 28 to the object position is small, the allowable distance L from the virtual screen to the object position is also small. On the other hand, when the object position is far away from the observer 28, a larger distance between virtual screen and object is acceptable.

Fig. 10 is a graph, characteristic data corresponding to which is stored in table 14 shown in Fig. 5. This data is used to provide preset limiting values for controlling the setting of the virtual screen position. The abscissa axis of the graph represents the distance Z from a preselected viewpoint of the observer to the object position. The ordinate axis represents the distance L between the virtual screen and the object. The graph indicates an allowable limit L₀ of the value of L, i.e. the distance from the object to the virtual screen.

As Fig. 10 indicates, when the distance Z between the viewpoint and the object is small, the allowable limit L₀ is small, so that the virtual screen needs to be placed close to the object. For larger values of the distance Z from the viewpoint to the object, the allowable limit L₀ is larger. With a large Z value, there is thus a wider range of acceptable virtual screen positions for a given object position. The virtual screen position is thus to be set, having regard to the Z value, so that the L value is less than L₀ as given by the graph of Fig. 10.

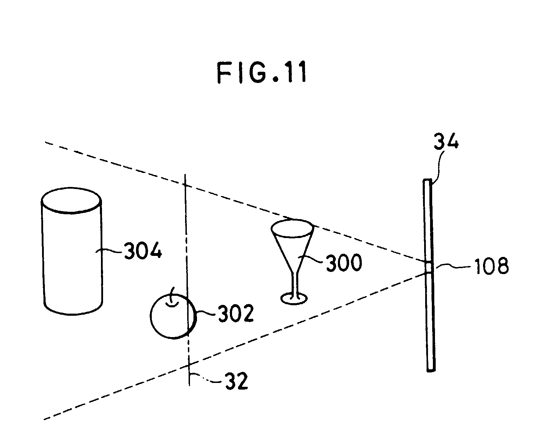

Fig. 11 shows a virtual screen setting method for a case in which three-dimensional bodies 300, 302 and 304 to be displayed exist in front of a hologram formation surface 34 and are separated from one another in the depth direction, being at different distances from the hologram formation surface. In this embodiment, the separate bodies 300, 302 and 304 are grouped together and treated as a single, composite object. The virtual screen 32 is then positioned, for example, so as to pass through the centre of gravity of this composite object. The virtual screen 32 as set is a plane which is parallel to the hologram formation surface 34.

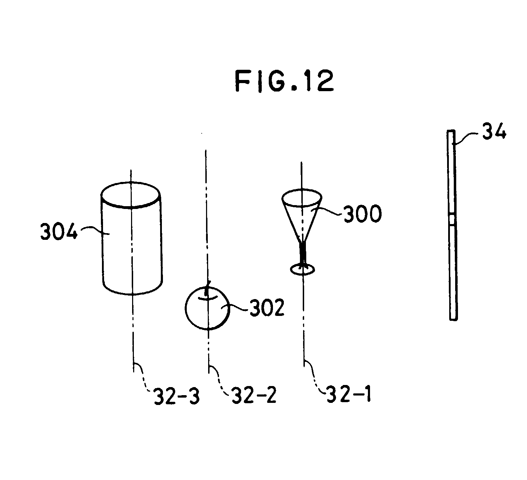

Fig. 12 shows another virtual screen setting method. In this embodiment, individual virtual screens 32-1, 32-2 and 32-3 are set, spaced apart in the depth direction perpendicular to the hologram formation surface 34, for the respective target bodies 300, 302 and 304. In this case, the virtual screens (projection planes) 32-1 to 32-3 are respectively positioned so as to contain the geometrical centres of gravity of the bodies 300, 302 and 304 and so as to be parallel to the hologram formation surface 34.

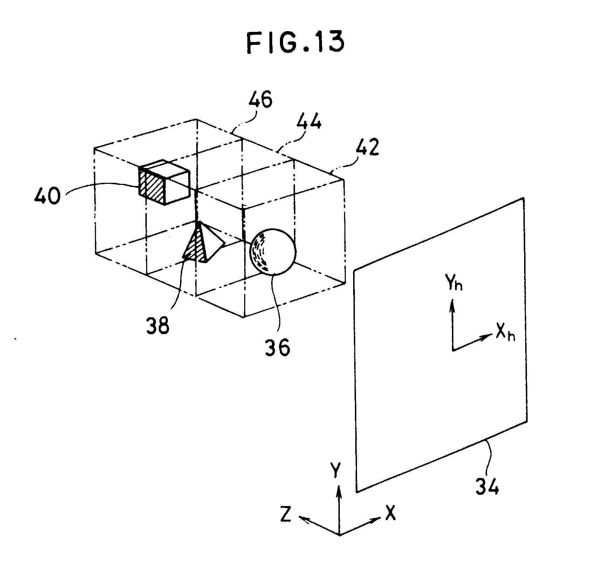

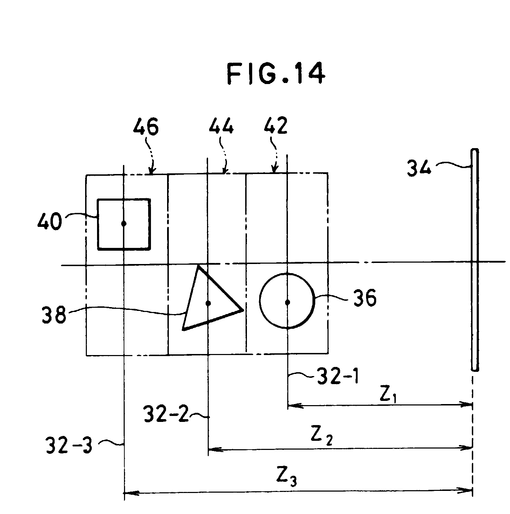

Fig. 13 shows another virtual screen setting method. In this embodiment, the display target space is sub-divided into a plurality of zones and a virtual screen is set for each of these zones. In the example shown, targets 36, 38 and 40 are distributed over the depth direction in the display space of the hologram formation surface 34. First, zones 42, 44 and 46 are set, each zone including one of the targets 36, 38 and 40. The coordinates XYZ are set in the target space and two-dimensional coordinates Xₕ and Yₕ are set for the hologram formation surface 34. Subsequently, as shown in Fig. 14, individual virtual screens 32-1, 32-2 and 32-3 are set respectively for the zones 42, 44 and 46. The virtual screens 32-1 to 32-3 are at distances Z₁, Z₂ and Z₃ respectively, in the depth direction, from the hologram formation surface 34. The distances Z₁, Z₂ and Z₃ in the depth direction can be used as parameters of the two-dimensional image when calculating the phase distribution at the hologram formation surface 34.

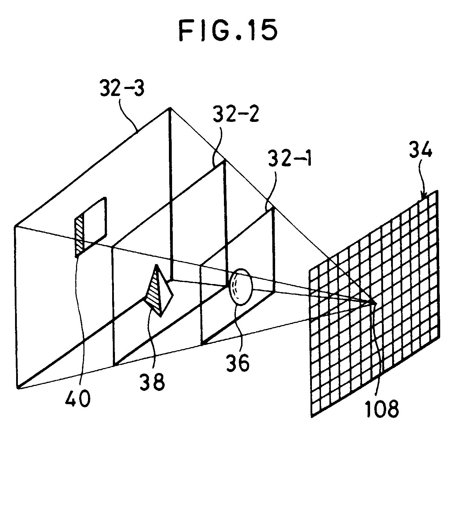

Fig. 15 illustrates the formation of two-dimensional projection data for the virtual screens 32-1 to 32-3 set respectively for the zones shown in Fig. 14. The hologram formation surface 34 is divided up in a matrix-like manner into a multiplicity of small areal segments, each for accommodating a micro hologram segment 108. Each hologram segment 108 corresponds to an individual region on a display device, for example a liquid crystal device, used to display the calculated phase distribution.

The formation of two-dimensional projection data used to calculate the phase distribution of the central hologram segment 108 in Fig. 15 is now described by way of example. The process of converting the three-dimensional image data to the required two-dimensional projection data in this case proceeds by effectively projecting two-dimensional images of the targets 36, 38 and 40 radially, from the central hologram segment 108, onto the respective virtual screens 32-1, 32-2 and 32-3.

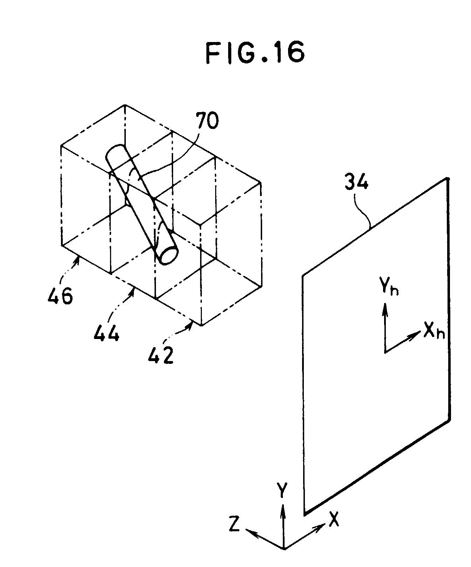

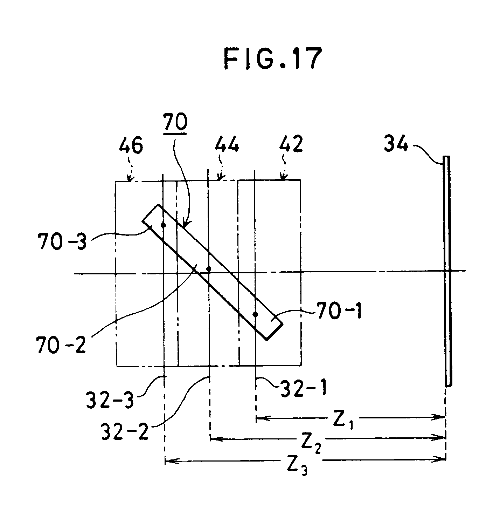

Fig. 16 shows a case where a single body is divided up into portions, an individual virtual screen being set for each of these portions of this single body. A cylindrical body 70 exists as a target to be displayed in the display space of the hologram formation surface 34. Three zones 42, 44 and 46 are defined in the depth direction, containing respective portions 70-1, 70-2 and 70-3 of the cylindrical body 70 as shown in Fig. 17. For a zonal division such as is shown in Fig. 17, the virtual screen planes 32-1, 32-2 and 32-3 are defined respectively for the zones 42, 44 and 46. In this case, the virtual screens 32-1, 32-2 and 32-3 are set so as to pass through the respective centres of gravity of the cylindrical portions 70-1, 70-2 and 70-3.

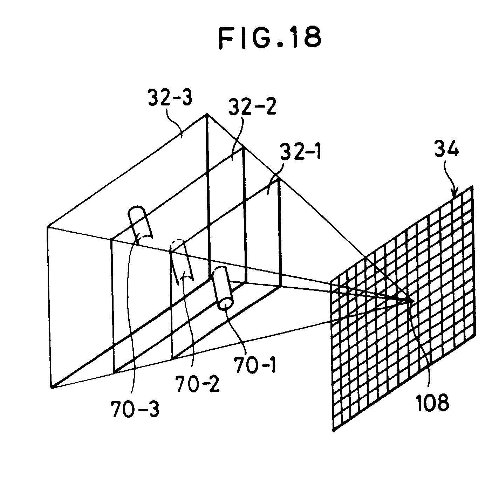

Fig. 18 shows the formation of two-dimensional projection data for the case in which respective portions of a single target which extends in the depth direction as shown in Fig. 17 are projected onto a plurality of virtual screens. The formation of two-dimensional projection data which is used in the calculation of the phase distribution at the central hologram segment 108 of the hologram forming surface 34 is described by way of example. The two-dimensional projection data of the cylindrical portions 70-1, 70-2 and 70-3 represents perspective images of those portions as they would be seen, projected respectively onto the virtual screens 32-1, 32-2 and 32-3, from the viewpoint of the central hologram segment 108.

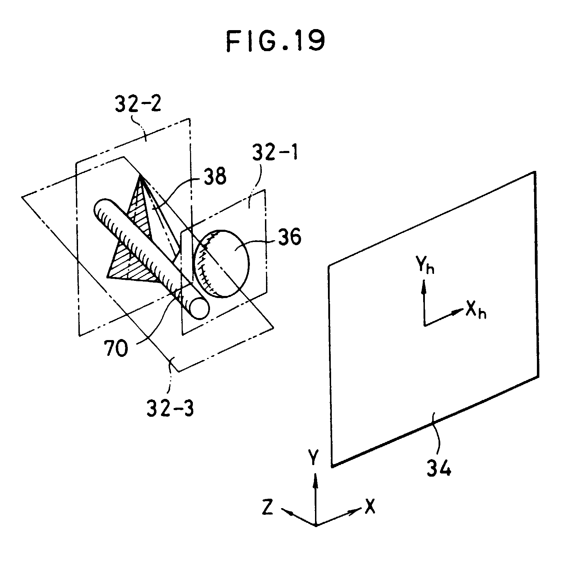

Fig. 19 shows another virtual screen setting method. In this embodiment, in addition to a sphere target 36 and a circular cone target 38, a cylindrical body 70 extending longitudinally in the depth direction is present. Virtual screens 32-1 and 32-2 are set for the targets 36 and 38. These screens pass through the respective centres of gravity of those targets and are parallel to the hologram formation surface 34. Virtual screen plane 32-3 is set for the cylindrical body, this screen being inclined so as to contain the central longitudinal axis of the cylindrical body 70. In general, a virtual screen plane can be set in any orientation appropriate to the shape of the target.

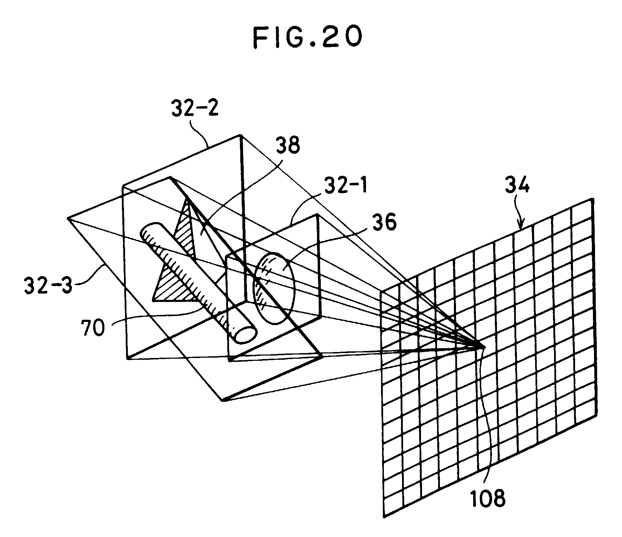

Fig. 20 illustrates the formation of two-dimensional projection data based on the setting of the virtual screens in Fig. 19. Two-dimensional projection data for the cylindrical body 70, for example, as seen projected radially from the central hologram segment 108, is computed and used in the calculation of a phase distribution relating thereto at the central hologram segment 108 of the hologram formation surface 34.

Calculation of the phase distribution is now described, the basic principles of hologram formation being explained first.

A hologram is formed when one laser beam is divided into two beams, one of which serves as a reference light beam and the other of which is used to irradiate an object and is scattered back by the object to provide an object light flux. A hologram can then be produced by combining the reference light beam with the object light flux so that interference occurs between them at a hologram formation surface. If a wave-front of the reference light beam is represented by R·exp(jφᵣ) and a wave-front of the object light flux is represented by O·exp(jφₒ), the exposure intensity I_{H} of a resulting hologram is${\text{I}}_{\text{H}} {\text{= R}}^{\text{2}} {\text{+ O}}^{\text{2}} {\text{+ 2·R·O·cos(φ}}_{\text{o}} {\text{- φ}}_{\text{r}} \text{)}$

On development of the hologram, changes in amplitudes and phases which are proportional to the exposure intensity I_{H} of equation (1) contribute to the hologram. To form the hologram electrically, a spatial light modulation device such as a liquid crystal device or the like, which can change the amplitude and phase of light incident thereon, can be used. An image of the object can be reproduced for viewing by irradiating the hologram with a wave-front equivalent to that of the reference light beam. In the exposure intensity I_{H} of equation (1), only the third term of the right-hand side contributes to the reproduction of the object light. Therefore, considering just that third term, the light T transmitted from the hologram is given by the following equation:${\text{T = I}}_{\text{H}} \text{·R·exp(jφ)} {\text{α 2·O·cos(φ}}_{\text{o}} {\text{- φ}}_{\text{r}} {\text{)·exp(φ}}_{\text{r}} \text{)} {\text{= O·exp(jφ}}_{\text{o}} {\text{) + O·exp{-j(φ}}_{\text{o}} {\text{- 2·φ}}_{\text{r}} \text{)}}$

The first term on the right-hand side of equation (2) denotes that the wave-front from the object was reproduced. The second term on the right-hand side indicates a conjugate wave of the object light. From the above description, it will be understood that it is sufficient to calculate only the third term of the right-hand side of the equation (1) in the calculation of the phase distribution of a hologram.

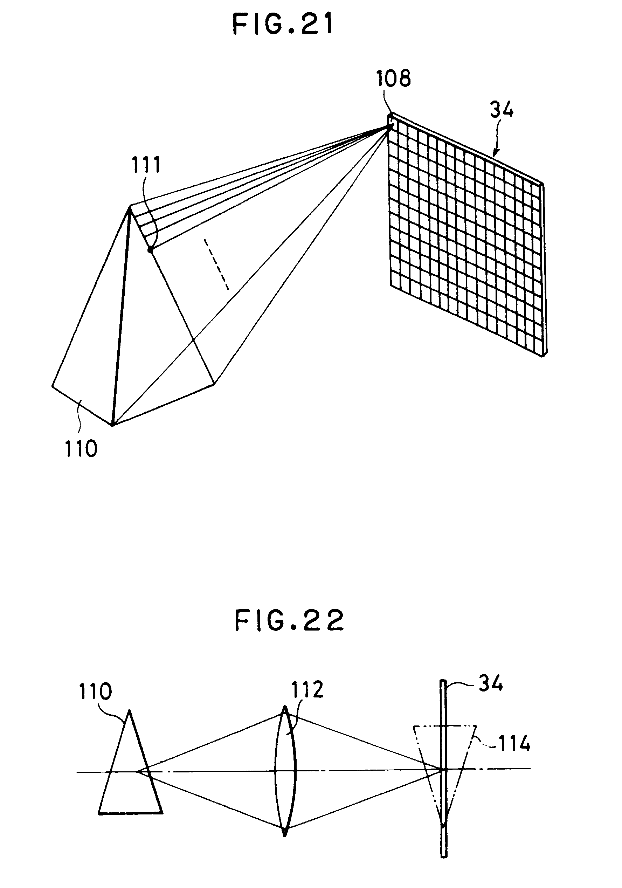

Fig. 21 illustrates the principles of the formation of a Fresnel-type hologram. If the reference light beam is formed by a plane wave, its intensity is independent of location, so light intensity R can be ignored, and one may regard the phase as being φᵣ = 0. When luminance (scattering degree) at a certain sampling point 111 having coordinates (Xᵢ, Yᵢ, Zᵢ) on an object 110 is set to Iᵢ, the exposure intensity I_{H} of the hologram segment 108, being the minimum areal division of the hologram formation surface 34, is 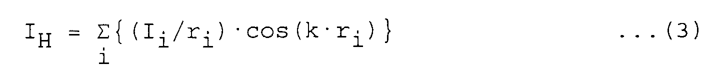 where k denotes the wave-number of the laser beam, and${\text{r}}_{\text{i}} {\text{= √{(X}}_{\text{i}} {\text{- X}}_{\text{hi}} {\text{)}}^{\text{2}} {\text{+ (Y}}_{\text{i}} {\text{- Y}}_{\text{hi}} {\text{)}}^{\text{2}} {\text{+ Z}}_{\text{i}} {\text{}}^{\text{2}} \text{}}$

For a Fresnel-type hologram as shown in Fig. 21 it is necessary to execute the calculations of equations (3) and (4) for the whole area of the hologram formation surface 34, since the light irradiated from the object 110 reaches the whole hologram.

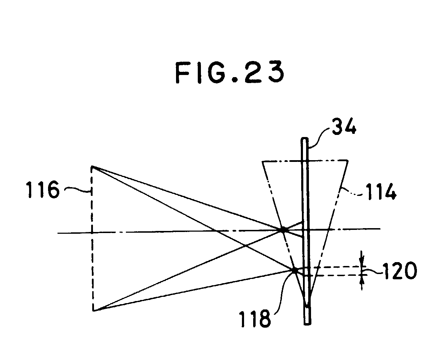

On the other hand, for an image-type hologram as shown in Fig. 22, the image of the object 110 is formed as a real image 114 at the position of the hologram formation surface 34 by an image forming lens 112. Therefore, as shown in Fig. 23, for example, light from a sampling point 118 of the real image 114 reaches only the portion 120, of the hologram formation surface 34, that is determined by a virtual opening 116. The region over which equations (3) and (4) need to be calculated is thus limited.

The calculation of the phase distribution of a hologram having parallax in the horizontal and vertical directions is now described.

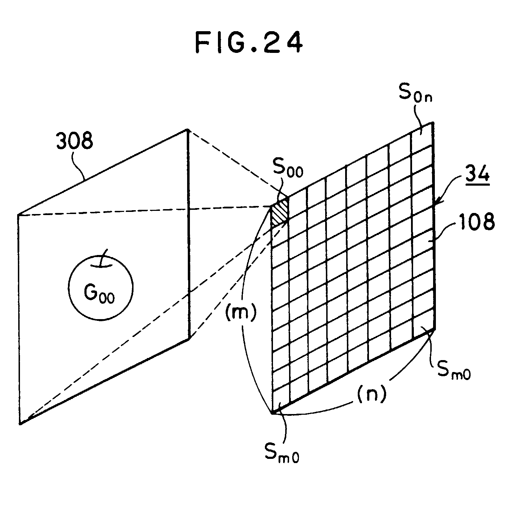

Fig. 24 illustrates a stage of the phase calculation of a hologram, having parallax in both the horizontal and vertical directions, on the basis of the two-dimensional image computed for the relevant position of the virtual screen. The hologram formation surface 34 is divided into (n+1) x (m+1) hologram segments 108 in a matrix form, there being n+1 segments in the horizontal direction and m+1 segments in the vertical direction. The segment at the left upper corner of the hologram formation surface 34 is designated S₀₀ and the segment at the right lower corner is designated Sₘₙ. A two-dimensional image 308, for which the segment S₀₀ is the corresponding viewpoint, is set to the virtual screen position shown in Fig. 24. The two-dimensional image 308 corresponding to the hologram segment S₀₀ is expressed by G₀₀. Prior to the phase calculation for the hologram forming surface 34, two-dimensional images G₀₀ to Gₘₙ corresponding respectively to all the hologram segments S₀₀ to Sₘₙ are computed. In the phase calculation of the hologram segment S₀₀, it is sufficient to execute the phase calculations of equations (3) and (4) with respect to the luminance data of all of the pixels of the corresponding two-dimensional image G₀₀.

In a manner similar to the above, with respect to the other remaining hologram segments S₀₁ to Sₘₙ, it is sufficient to execute similar phase calculations with regard to the corresponding two-dimensional images G₀₁ to Gₘₙ formed by projection respectively from the hologram segments S₀₁ to Sₘₙ serving as viewpoints.

Phase calculation of an image hologram is now described.

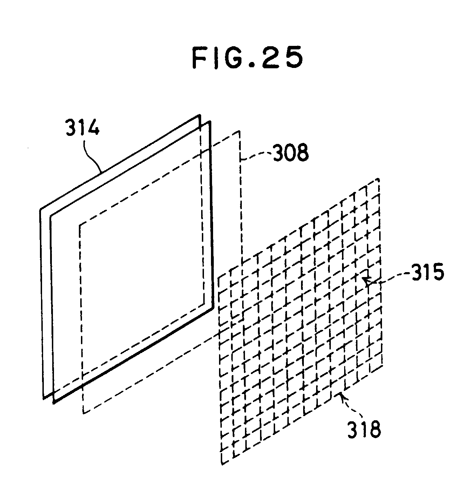

Fig. 25 illustrates details of phase calculation of the image hologram based on the two-dimensional image formed on the virtual screen which has been set. A virtual holographic stereogram 318 corresponds to the hologram formation surface 34 shown in Fig. 24 and has a virtual opening 315 corresponding to the hologram segment 108. Thus, the virtual holographic stereogram 318 is made up of matrix elements in a range from a virtual opening segment S₀₀ at the left upper corner to a virtual opening segment Sₘₙ at the right lower corner. A two-dimensional image 308 is set at the virtual screen position set for the virtual holographic stereogram 318. As for the hologram formation surface 34 in Fig. 24, the two-dimensional images G₀₀ to Gₘₙ, one of which is the two-dimensional image 308, have been prepared in correspondence to the virtual opening segments S₀₀ to Sₘₙ. An image hologram formation surface 314 is arranged at a position near the two-dimensional image 308 and serves as a target for the phase calculation.

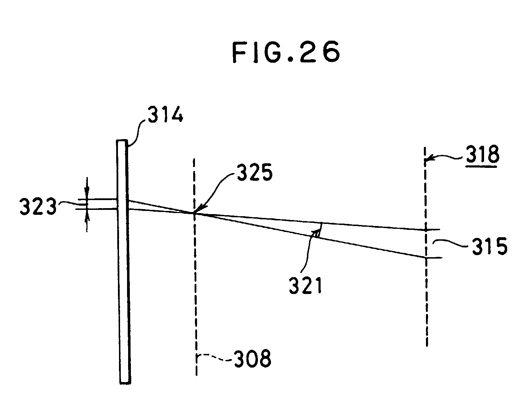

The calculation of the phase distribution for the image hologram formation surface 314 is executed over a region 323 shown in Fig. 26. Assuming that the two-dimensional image 308 corresponding to the virtual opening 315 of the virtual holographic stereogram 318 was set, the light beam incident on the image hologram formation surface 314 from the two-dimensional image 308 has passed through the virtual opening 315. Therefore, on the image hologram formation surface 314, the light flux incidence region 323 which is determined by the extent of the light flux due to the virtual opening 315 corresponds to a pixel 325 of the two-dimensional image 308. Phase distribution is thus calculated with regard to this light flux incidence region 323.

In a manner similar to the above, a light flux incidence region due to the virtual opening is obtained for each pixel of the two-dimensional image 308 and the corresponding phase distribution is calculated for the associated light flux incidence region.

After completion of the phase calculation for the image hologram formation surface 314 of the two-dimensional image 308 corresponding to one virtual opening as mentioned above, similar phase calculations are executed with respect to the two-dimensional images 308 corresponding to all of the other remaining virtual openings. A composite phase distribution at the image hologram formation surface 314 is derived as the sum of the phase distributions obtained from all of the phase calculations.

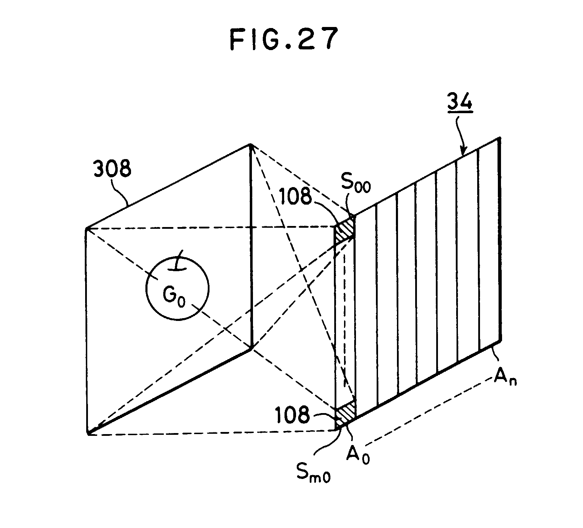

Fig. 27 illustrates details of the phase calculation of a hologram having parallax in only the horizontal direction. The hologram formation surface 34 is divided up in the horizontal direction into n+1 strip-shaped regions A₀ to Aₙ extending longitudinally in the vertical direction. Two-dimensional images G₀ to Gₙ, as viewed from respective horizontally separated positions on the individual strips A₀ to Aₙ, have been prepared to form in each case a two-dimensional image 308. To calculate the phase distribution corresponding to the strip A₀ at the left-hand edge of the hologram formation surface 34, the two-dimensional image G₀ appropriate to the viewpoint on the strip A₀ is set as the image 308 on the virtual screen. Similarly to the hologram formation surface 34 shown in Fig. 24, the strip A₀ is divided up in the vertical direction into m+1 hologram segments 108. The corresponding phase distributions are calculated respectively for all of the hologram segments S₀₀ to Sₘ₀, using equations (3) and (4), for the same two-dimensional target image G₀. After the phase distribution for the strip A₀ has been calculated, the target images appropriate to the other strips A₁ to Aₙ are set in turn and the associated phase calculations performed in a similar manner.

When calculating the phase distributions for the strips A₀ to Aₙ, the respective viewpoint positions on the strips A₀ to Aₙ, from which positions the three-dimensional image is projected onto the virtual screen surface to form the appropriate two-dimensional images, are spaced horizontally from one another, or the viewpoint position is changed whilst the eyes are kept directed to one point of the object, so that the respective corresponding two-dimensional images 308 are displayed at different positions.

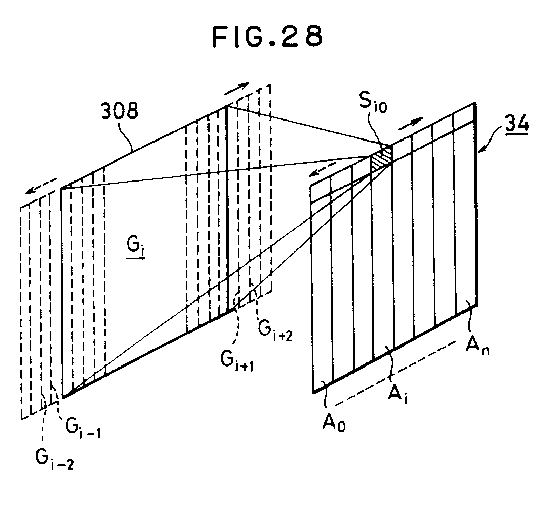

Fig. 28 illustrates details of the calculation of a phase distribution for a case where the direction of the eyes viewing a target was moved in the horizontal direction and the viewpoint position changed. The two-dimensional image 308 having an image content Gᵢ corresponding to the strip Aᵢ located near the centre is shown by a frame indicated by a solid line. With respect to the strip Aᵢ₋₁, which is located immediately to the left of the strip Aᵢ, when the size of two-dimensional image 308 is set to the same size, a two-dimensional image Gᵢ₋₁ shown by broken lines (offset to the left by one image) is derived. With regard to the strip Aᵢ₊₁ that is offset to the right by one strip from strip Aᵢ, a two-dimensional image Gᵢ₊₁ shown by broken lines (offset to the right by one image) is derived.

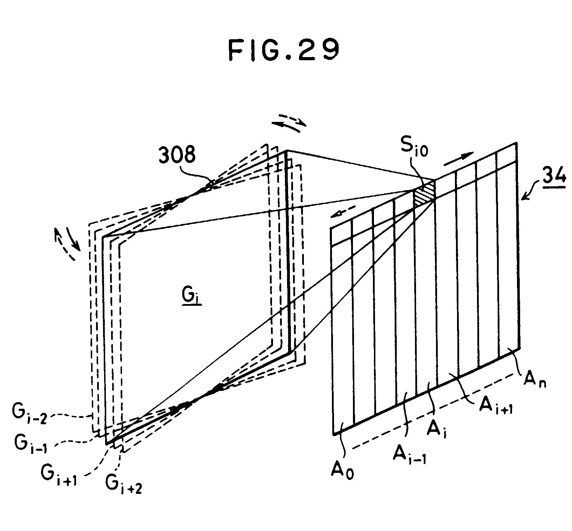

Fig. 29 shows a case where the eyes are kept always directed to one point on a target from different viewing positions, corresponding respectively to the strips A₀ to Aₙ, spaced apart in the horizontal direction. In this case, when it is assumed that the two-dimensional image 308 corresponding to the strip Aᵢ located near the centre is expressed by Gᵢ shown by a solid-line frame, a two-dimensional image Gᵢ₋₁ that is displaced clockwise by one image is found to correspond to the strip Aᵢ₋₁ that is offset to the left by one region from Aᵢ. With regard to strip Aᵢ₊₁ that is offset to the right by one region from strip Aᵢ, a two-dimensional image Gᵢ₊₁ that is displaced anticlockwise by one image is derived. That is, the plane of the two-dimensional image 308 is rotated in response to a horizontal change in viewpoint position. The position of the pixel data of the two-dimensional image is set in accordance with the motion of the plane of the two-dimensional image. The phase distribution of the corresponding strip is calculated in accordance with the two-dimensional image sequentially rotated.

As for the calculation of the phase distribution of a hologram having parallax in only the horizontal direction, shown in Fig. 27, when calculating the phase distribution of the image hologram, a virtual opening comparable with the virtual opening 315 of the virtual holographic stereogram 318 shown in Figs. 25 and 26 is here set on a virtual strip which is obtained by dividing up the hologram formation surface in the horizontal direction and which has its longitudinal axis extending in the vertical direction as shown in Fig. 27. It is sufficient that a light flux incidence region at the image hologram formation surface is obtained with respect to each pixel of the two-dimensional image corresponding to each virtual strip opening, and a phase distribution is calculated from the corresponding pixel for the light flux incidence region concerned.

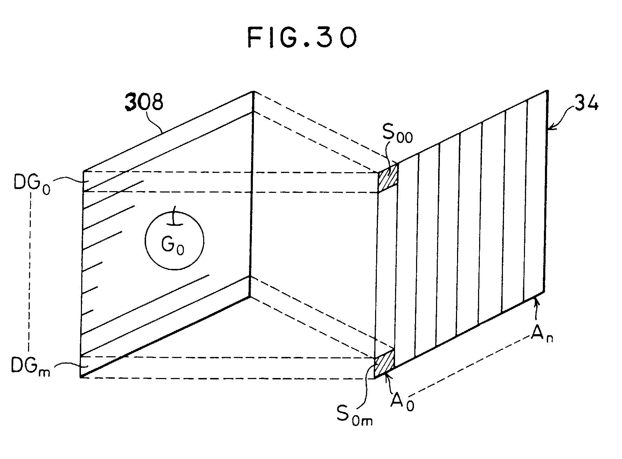

Phase calculation of a hologram, involving division of two-dimensional images, is now described with reference to Fig. 30, which illustrates details of the calculation of the phase distribution of a hologram having parallax in only the horizontal direction. The hologram formation surface 34 is divided horizontally into a series of vertically extending elongate strips A₀ to Aₙ, and a projected two-dimensional image 308 at the virtual screen plane is divided vertically into horizontally extending elongate regions DG₀ to DGₘ. The two-dimensional image 308 shown is the two-dimensional image G₀ obtained by projection from that one of the horizontally arrayed viewpoints which lies on the strip A₀ at the left of the hologram formation surface 34. The divisional regions DG₀ to DGₙₘ of the two-dimensional image Gₒ are taken as corresponding to the respective vertically-arrayed hologram segments S₀₀ to S₀ₘ of the hologram formation surface 34. In this case, for the hologram segment S₀₀ a phase distribution is calculated from only the pixel associated with the corresponding divisional region DG₀. For the other hologram segments S₀₁ to S₀ₘ, phase distributions are calculated respectively by reference to the individual corresponding divisional regions DG₁ to DGₘ of the two-dimensional image G₀. By dividing the two-dimensional image into elongate regions extending in the horizontal direction, as described above, the amount of calculations needed to formulate the phase distribution for one of the hologram segments Sᵢⱼ (where, i = 0 to n, j = 0 to m) on the hologram formation surface 34 can be reduced.

In performing the phase calculations for an image hologram, based on the divided two-dimensional image shown in Fig. 30, the phase distributions in the light flux incidence range corresponding to the virtual opening concerned are calculated for each divisional region DG₀ to DGₘ of the two-dimensional image 308. For example, when the top hologram segment S₀₀ of strip A₀ is set as the virtual opening, a light flux incidence range, over which the light beam passes through the virtual opening corresponding to the segment S₀₀ and reaches the image hologram formation surface, is obtained with respect to each of the pixels forming the divisional region DG₀ of the corresponding two-dimensional image 308. It is sufficient to calculate the phase distribution relating to each such pixel with respect to the corresponding light flux incidence region.

With regard to the phase distribution of the image hologram which is formed from the divided two-dimensional images in Fig. 30, when the calculation is based on reference light that is incident perpendicularly on the hologram, the phase distribution in the image hologram being dependent only on horizontally varying components, it is necessary, upon reproduction therefrom of a three-dimensional image, to provide for optical enlargement of the three-dimensional image in the vertical direction.

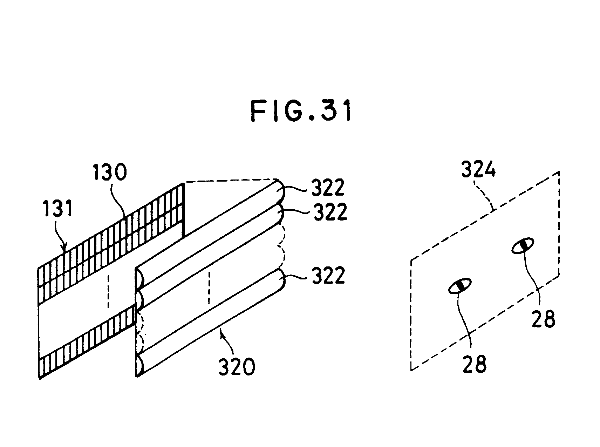

As shown in Fig. 31, therefore, when the phase distribution component for only the horizontal direction is produced on a spatial light modulation device 130 and a three-dimensional image is to be displayed, a Lenticular sheet 320 in which cylindrical lenses 322 are arrayed vertically may be disposed in front of the spatial light modulation device 130 to perform a visual field enlarging function in the vertical direction. In this way, a field of vision 324 which is diffused in the vertical direction by the Lenticular sheet 320 and also has sufficient width in the vertical direction can be produced by wave-front conversion of reproduction light at a hologram, expressed by the spatial light modulation device 130, having a phase distribution computed only for the horizontal direction.

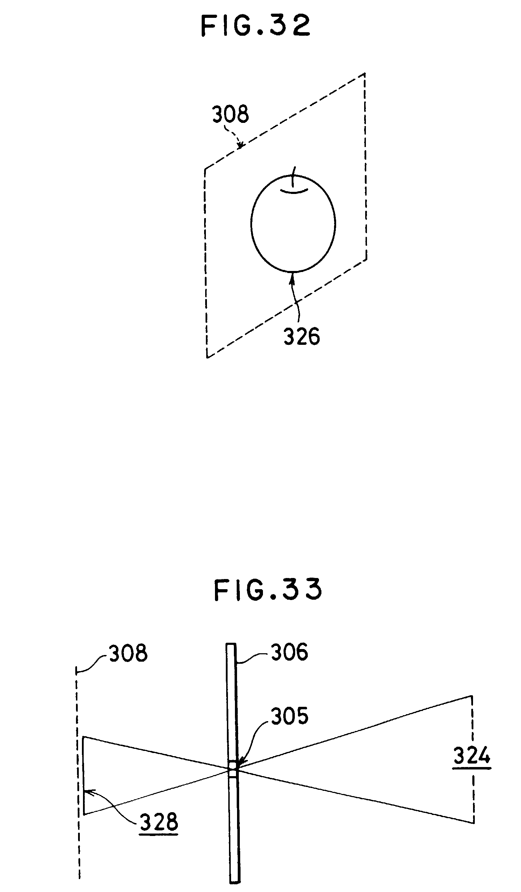

Fig. 32 illustrates a method for reducing the amount of calculation involved in calculating the phase distribution for an image hologram. A region 326 containing the actual image in the two-dimensional image field 308 is used as the source of pixel data for the phase calculation. The pixels in the region outside the actual image region 326 are eliminated from the target for the purposes of the phase calculation, thereby reducing the amount of calculation needed.

Fig. 33 illustrates a method for reducing the amount of calculation involved in computing the phase distribution to form a hologram having parallax in both the horizontal and vertical directions, as described with reference to Fig. 24. To this end, a visual field 324 (Fig. 33) is set in relation to a hologram 306, and a central hologram segment 305 is considered by way of example. The phase distribution for the hologram segment 305 is calculated by using only the pixels in the display region 328 of the two-dimensional image 308 that is determined by the visual field 324. In this way, by limiting the region of the two-dimensional image which is used for the calculation of the phase distribution in dependence on the visual field, the amount of calculation needed can be significantly reduced.

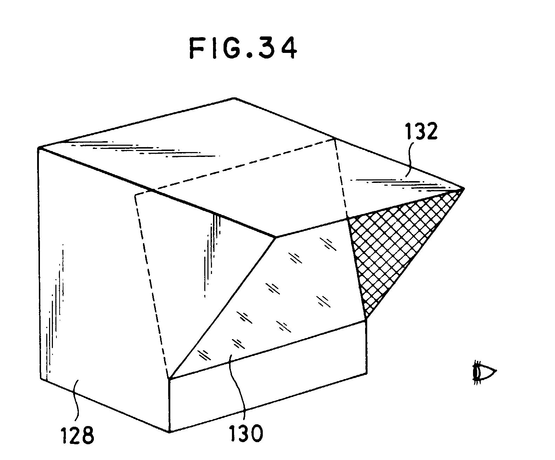

Fig. 34 shows an external view of a hologram display apparatus for forming a hologram by expressing (producing a physical reproduction of) a computed phase distribution and for displaying a three-dimensional image by irradiating the expressed hologram with a reproduction light beam. A spatial light modulation device 130 for electrically forming the holograms is provided at the front of an apparatus main body 128. A hood 132 is provided to block the zeroth order light transmitted through the spatial light modulation device 130.

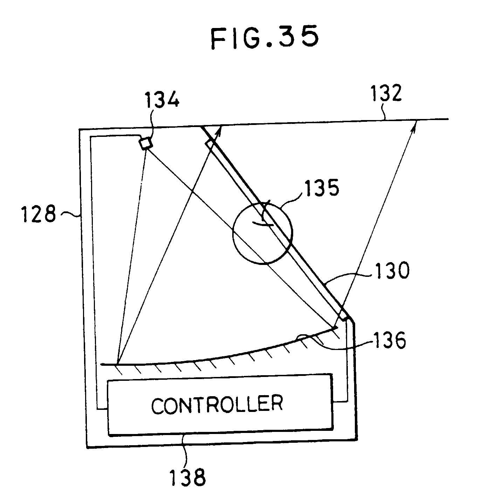

Fig. 35 shows the internal structure of the Fig. 34 apparatus. A laser light source 134, which functions as a point light source, a collimating mirror 136 and a controller 138 are disposed in the main body of the apparatus. The controller 138 gives the computed phase distribution to the spatial light modulation device 130. A spherically diverging beam from the point light source 134 is converted into a parallel light beam (i.e. collimated) by the reflecting type collimating mirror 136 and is directed thereby onto the spatial light modulation device 130, thereby causing a three-dimensional image 135 to be reproduced. The part of the collimated light beam which passes directly through the spatial light modulation device 130 as a zeroth order component is blocked by the hood 132.

In a preferred embodiment, the laser light source 134 is a small semiconductor laser with a spectral bandwidth of a few nanometres or less, which can serve to reproduce a clear three-dimensional image. Any wavelength in the visible range can be used. It is, however, necessary to consider the wavelength of the light source, to be used for reproduction, when calculating the hologram phase distribution. For example, it is possible to use a semiconductor laser which can emit a red light beam whose wavelength is of the order of 600 nm, a green light beam whose wavelength is of the order of 500 nm, or a blue light beam whose wavelength is of the order of 400 nm.

In the case of a Fresnel-type hologram with the object 110 positioned away from the hologram forming surface 34 as shown in Fig. 21, as the distance increases, the hologram (phase distribution) becomes more sensitive to the differences in colour over the spectral bandwidth of the reproduction light. In this case, it is therefore particularly desirable to use a semiconductor laser having a narrow bandwidth.

On the other hand, in the case of an image type hologram with the object 114 located near the hologram forming surface 34 as shown in Fig. 22, the hologram (phase distribution) is relatively insensitive to the colour variation over the spectral bandwidth of the reproduction light. Therefore, an acceptably clear reproduced image can be obtained even when the spectral bandwidth of the source is slightly more than a few nanometres. In this case, for example, it is possible to use a halogen lamp or the like, whose spectral bandwidth is about 10 nm, instead of a laser source.

The spherical wave is emitted directly from the laser light source 134 in Fig. 35, but it is also possible to construct the apparatus in such a manner that a laser beam is passed through an objective lens and a pin hole, or in such a manner that a laser beam is transmitted through an optical fibre so as to emerge from one end thereof.

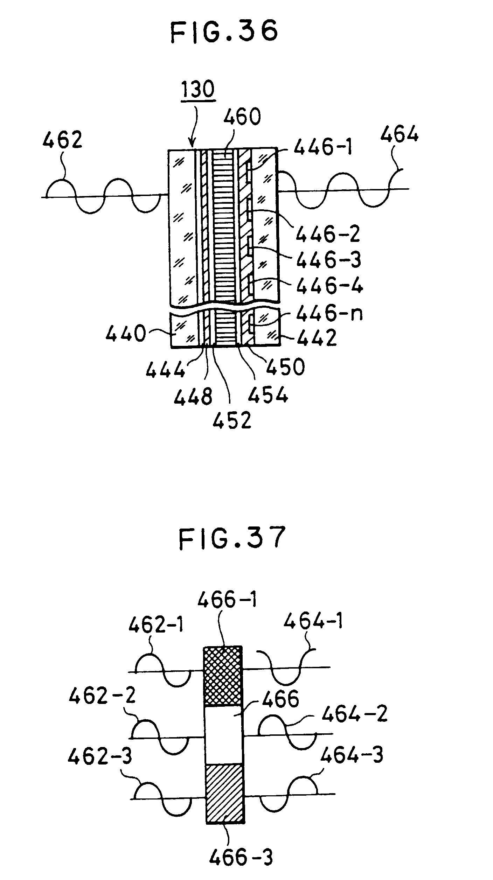

Fig. 36 shows an embodiment of the spatial light modulation device 130 comprises a liquid crystal display panel of the transmitting type. A glass substrate 440 at an input side of the device carries a uniform transparent electrode 444. Branched transparent electrodes 446-1 to 446-n constituting display segments are arranged inwardly of a glass substrate 442 at an output side of the device. Liquid crystal orientation films 452 and 454 are provided respectively adjacent to the transparent electrodes 444 and 446-1 to 446-n, but are separated therefrom by respective insulating layers 448 and 450. Liquid crystal 460 is disposed between the orientation films 452 and 454, thus forming a liquid crystal panel. The liquid crystal display device is driven so that a voltage corresponding to the calculated phase information is applied to each liquid crystal cell in a manner determined by signals applied to the electrodes 446-1 to 446-n. The refractive index of the liquid crystal cell for the transmitting direction of a reproduction light beam 462 is locally modulated in accordance with the control voltages applied.

Fig. 37 shows details of the phase modulation with respect to three of the pixels of the liquid crystal display, as an example. Reproduction light rays 462-1 to 462-3 of the same phase, for example plane wave rays, enter from the left side into pixels 466-1 to 466-3. These pixels are driven so as to have different phase states (i.e. so as to have different refractive indices), so that phase differences exist between the outgoing light beams 464-1 to 464-3 as a result of their different optical path-lengths in the respective liquid crystal pixels 466-1 to 466-3.

Ideally, it is desirable that any phase in a range from 0 to 2π can be expressed, i.e. up to the equivalent of an optical distance of a full wavelength. However, even when the phase is expressed discretely in terms of a multivalue scale, phase distribution can be expressed approximately so as to be satisfactory for practical purposes. The thickness d of the liquid crystal layer is selected so as to satisfy the condition that Δn x d, the product of the thickness d and the maximum refractive index change Δn which can be induced by the applied voltage, is equal to one wavelength λ of the reproduction light. To express the phase distribution accurately and to obtain a clearly reproduced three-dimensional image, it is necessary to use a liquid crystal cell size of the order of a wavelength, in a liquid crystal display device having a high resolution.

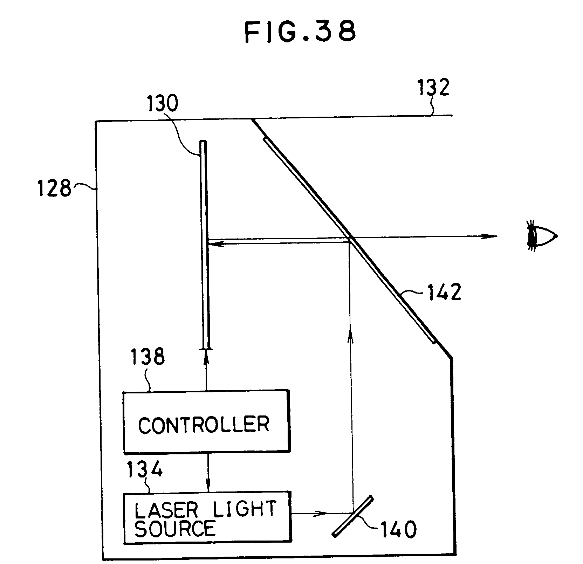

Fig. 38 shows another embodiment of a stereoscopic display apparatus, in which a reflecting-type spatial light modulation device 130 is used. The device 130 is provided in the main body 128 of the apparatus and electronically expresses a hologram having the phase distribution calculated by the controller 138. A reproduction light beam from the laser light source 134 is reflected by a mirror 140 and is further reflected by a half mirror 142 and enters the reflecting-type light modulation device 130. The modulated light from the modulation device 130 passes through the half mirror 142, thereby displaying a three-dimensional image.

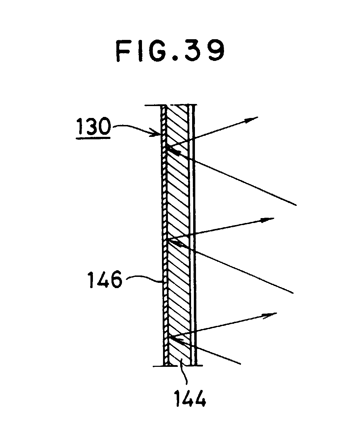

As shown in Fig. 39, the reproduction light is input from one side of the reflection-type light modulation device 130, passes through a liquid crystal layer 144 in the device, is reflected by a reflecting surface 146 at the opposite side of that layer, traverses the layer 144 once more, and is emitted. Since the reproduction light passes through the liquid crystal display layer 144 twice in this reflection-type device, the thickness of the liquid crystal layer needed to obtain a given phase change can be reduced to one half of that needed in the transmission-type liquid crystal display device of Fig. 36. In this embodiment a liquid crystal of the homogeneous orientation type is used so that the polarization is preserved.

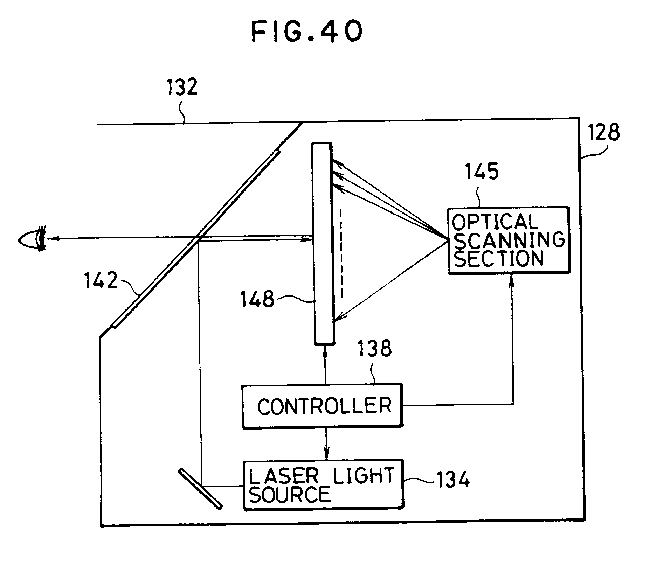

Fig. 40 shows another embodiment of a stereoscopic display apparatus. In this embodiment the information defining the calculated phase distribution is optically written and reproduced. A spatial light modulation device 148, on which phase distribution information can be optically written by a laser beam from a light scanning section 145, is provided in the main body 128 of the apparatus. The writing of the phase distribution information onto the light modulation device 148 by the laser beam from the light scanning section 145 is controlled by the controller 138 so that the modulation device 148 is set into the same state as the reflection-type liquid crystal display device shown in Fig. 39. With the device 148 in this state a reproduction light beam from the laser light source 134 is reflected by the half mirror 142 and so as to be incident on the left-hand side of the modulation device 148, and modulated light reaches the observer by way of the half mirror 142, causing the observer to see a displayed three-dimensional image.

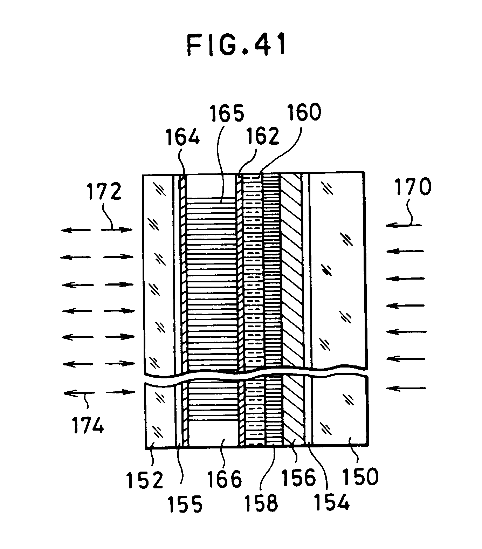

Fig. 41 shows internal structure of the optically writable spatial light modulation device 148 of Fig. 40. A transparent electrode 154, having thereon a photoconductive layer 156 covered by a light shielding layer 158, is provided on a glass substrate 150, at the right-hand side of the device, which receives a writing light beam 170. A dielectric mirror 160 is provided next to the light shielding layer 158. A glass substrate 152 is provided at the left-hand side of the device, for receiving and re-emitting a reproduction light beam 172. A transparent electrode 155 is provided next to the substrate 150. A liquid crystal layer 165 is arranged between the transparent electrode 155 and the dielectric mirror 160, being separated therefrom respectively by orientation films 164 and 162.

In operation of the light modulation device 148 of Fig. 41, the writing light beam 170 when incident on the photoconductive layer 156 causes its resistivity to drop locally as the light intensity increases. The local change in resistance of the photoconductive layer 156, while the driving voltage remains constant, causes the voltage across the adjacent part of the liquid crystal layer 165 and dielectric mirror 160 to change locally by an amount corresponding to the change in resistance of the layer 156. When the voltage which is dropped across that part of the liquid crystal changes as mentioned above, the refractive index of the liquid crystal is thereby caused to change locally. In consequence, the incident reproduction light beam 172, after reflection by the dielectric mirror 160, is returned via the substrate 152 as a modulated light beam 174 carrying the phase modulation information expressed by the local changes of refractive index in the layer 165.

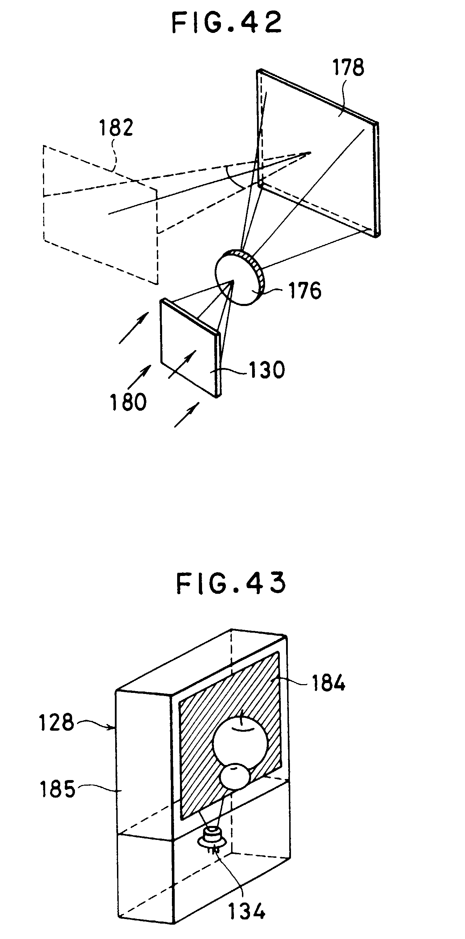

Fig. 42 shows another embodiment of a stereoscopic display apparatus. In this embodiment, a reproduction light beam 180 enters the spatial light modulation device 130, which uses a transmission-type liquid crystal display or the like to express the calculated phase distribution, and is modulated thereby. The modulated light beam from the spatial light modulation device 130 is enlarged by a projection optical system 176 and is projected onto a hologram screen 178, thereby enabling a three-dimensional image to be observed over a visual field 182 having the indicated angular range.

Fig. 43 shows another embodiment of a stereoscopic display apparatus. In this embodiment a hood for preventing the zeroth order light component from being displayed can be dispensed with. A refracting body 185 for suppressing the emission of the zeroth order light is integrated with the spatial light modulation device 184 in the apparatus main body 128.

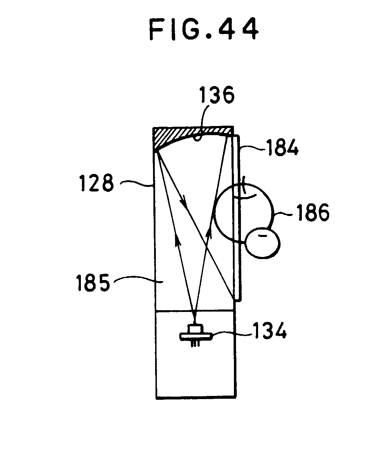

As shown in Fig. 44, in the stereoscopic display apparatus of Fig. 33 a spherical wave from the laser light source 134 is directed via the refractive body 185 and reflected by a collimating mirror 136 so as to be directed onto the spatial light modulation device 184, integrated with the refracting body 185, at an angle of incidence equal to or larger than the critical angle for the refracting body. The zeroth order light is therefore totally internally reflected, thereby preventing zeroth order light from being emitted. A hood to block out the zeroth order light is therefore not required.

To display colour images, it is sufficient that the formation of the three-dimensional image information in step S2 of Fig. 6, the formation of the two-dimensional image in step S3, and the calculation of the phase distribution in step S4, are executed for each spectral component, for example for R, G and B components.

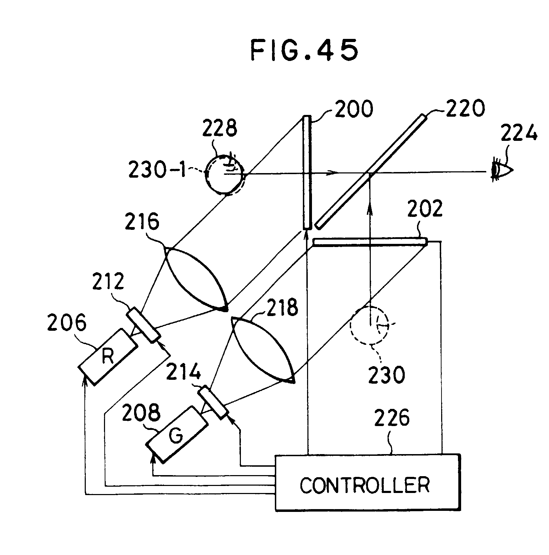

Fig. 45 shows an embodiment of a colour stereoscopic display apparatus for producing a multicolour display, the apparatus comprising two of the stereoscopic display apparatuses described above. A spatial light modulation device 200 is driven in accordance with the phase distribution calculated with respect to, for example, the R component by a controller 226. A spatial light modulation device 202 is driven in accordance with the phase distribution calculated with respect to, for example, the G component. Respective reproduction light beams from laser light sources 206 and 208 irradiate the spatial light modulation devices 200 and 202 through shutters 212 and 214 and collimating lenses 216 and 218 respectively, thereby displaying a three-dimensional R component image 228 and a three-dimensional G component image 230. The G component image 230 is reflected by a half mirror 220 and is seen by the eyes 224 of the observer. At the same time, the R component image 228 is seen via the half mirror 220. Consequently, the observer can see a synthesized three-dimensional colour image comprised of a G component image 230-1 superimposed on the R component image 228.

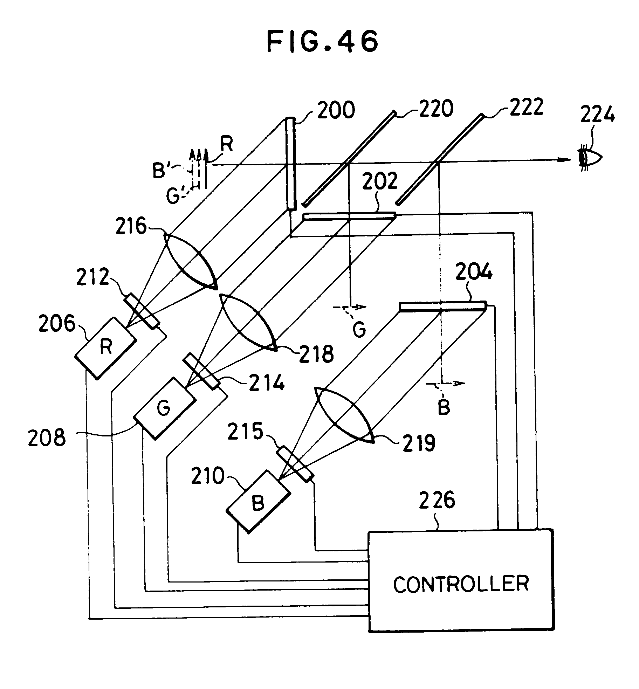

Fig. 46 shows another colour stereoscopic display apparatus for use in an embodiment of the invention. In this embodiment the phase distribution is calculated for each of the R,G and B components to enable a synthesized colour image to be displayed. In this embodiment, in addition to the two display apparatuses used in the embodiment of Fig. 45, a laser light source 210, a shutter 215 and a collimating lens 219 are provided in a display system for the B component. An additional spatial light modulation device 204, driven in accordance with the phase distribution calculated with respect to the B component, is also provided. Further, a half mirror 222 is added for combining the B component image from the spatial light modulation device 204 with the R and G component images. A synthesized three-dimensional colour image, formed from the R, G and B components shown by the arrows, can thus be observed by the eyes 224 of the observer.

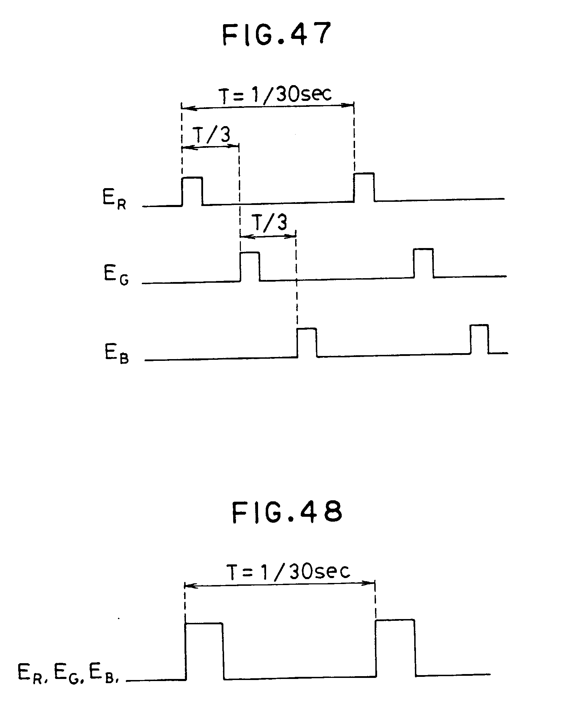

Fig. 47 shows a timing chart of driving signals E_{R}, E_{G} and E_{B} for time-divisionally displaying the RGB components by opening or closing the shutters 212, 214, and 215, this being controlled by the controller 226 illustrated in Fig. 46. The driving signals E_{R}, E_{G} and E_{B} are generated so as to be repeated at intervals T of 1/30 second and so as to have relative timing delays of T/3. In the case of the embodiment of Fig. 45, with only the components R and G, the timing deviation between the two signals E_{R} and E_{G} can be set to T/2.

Fig. 48 shows a timing chart of another driving method suitable for use with the embodiments of Figs. 45 and 46. In this case, the shutters are opened in unison at intervals of T = 1/30 second and three-dimensional images of two or three colour components are simultaneously displayed at the appropriate positions, thereby synthesizing the required colour images.

Embodiments of the invention as described above can produce a moving thee-dimensional image (i.e. dynamic) display, such that the object position is seen to change with the elapse of time, using phase distributions calculated under conditions such that the distance between the object and the virtual screen (projection plane) is always set to a value within a preselected allowable range, thereby reducing observer fatigue as compared with prior art display methods.

## Claims

1. A method of producing computer-generated holograms for use in displaying a stereoscopic image of a three-dimensional object which moves so that its distance from a hologram formation surface (34) varies, the method comprising, for each in turn of a succession of different instants (t₁, t₂,...) in time:
computing a three-dimensional coordinate representation of the object (30-1, 30-2,...) as positioned at the instant concerned;
defining a projection plane (32-1, 32-2,...) at a location which varies with the object position in such a way that the distance (L₁, L₂,...) between the object and the projection plane remains less than a preset limiting value (L₀);
computing a series of two-dimensional perspective images of the object as viewed respectively from an array of different viewpoints, each such image representing the object as it would be seen projected onto the projection plane (32) defined for the instant concerned;
computing a set of phase holograms representative respectively, at the said hologram formation surface (34), of the perspective images of the series computed for the instant concerned; and
producing a composite hologram incorporating respective physical reproductions (108) of the phase holograms of the set computed for the instant concerned, which reproductions (108) are arrayed similarly to their respectively corresponding different viewpoints so that the composite hologram can be irradiated with a light beam to generate the desired stereoscopic image (135) of the object as positioned at the instant concerned.

2. A method according to claim 1, wherein each said projection plane (32) is defined so that it contains the centre of gravity of the computed three-dimensional coordinate representation of the said object at the instant concerned.

3. A method according to claim 1 or 2, wherein the said object is a composite object, comprising a plurality of separate bodies (300, 302, 304).

4. A method of producing computer-generated holograms for use in displaying a stereoscopic image of a plurality of three-dimensional objects (36, 38, 40) which move so that their respective distances from a hologram formation surface (34) vary, the method comprising, for each in turn of a succession of different instants (t₁, t₂,...) in time:
computing respective three-dimensional coordinate representations of the said objects (36, 38, 40) as positioned at the instant concerned;
defining for each object individually a projection plane (32-1, 32-2, 32-3) at a location which varies with the object position in such a way that the distance between the object concerned and its individual projection plane remains less than a preset limiting value (L₀);
computing a series of composite two-dimensional perspective images of the said objects as viewed respectively from an array of different viewpoints, each such image representing each of the objects as it would be seen projected onto the projection plane defined individually therefor in respect of the instant concerned;
computing a set of phase holograms representative respectively, at the said hologram formation surface, of the composite perspective images of the series computed for the instant concerned; and
producing a composite hologram incorporating respective physical reproductions (108) of the phase holograms of the set computed for the instant concerned, which reproductions (108) are arrayed similarly to their respectively corresponding different viewpoints so that the composite hologram can be irradiated with a light beam to generate the desired stereoscopic image of the objects as positioned at the instant concerned.

5. A method according to claim 4, wherein each said projection plane (32-1, 32-2, 32-3) is defined so that it contains the centre of gravity of the computed three-dimensional coordinate representation of the object (36, 38, 40) concerned at the instant concerned.

6. A method according to claim 4 or 5, wherein the said objects are respective different parts (70-1, 70-2, 70-3) of a single body (70).

7. A method according to any preceding claim, wherein the said preset limiting value (L₀) is set at a first magnitude the distance (Z) of the object concerned from a preselected observation point (28) is within a first range of values but is set at a second magnitude, larger than the first magnitude, when that distance (Z) is within a second range of values that are larger than the values in the said first range.

8. A method according to any preceding claim, wherein the said different viewpoints are distributed along a horizontal line, and wherein the phase holograms of each such set are elongate, so that each composite hologram when arranged so that the said physical reproductions (A₀...Aₙ) have their longitudinal axes extending vertically, and when irradiated, provides an image giving an impression of parallax in the horizontal direction.

9. A method according to claim 8, wherein in the course of computing each set of phase holograms each of the perspective images (G₀, G₁, G₂...) of the series computed for the instant concerned is divided up, in the vertical direction, into horizontally extending elongate regions (DG₀...DG₀) and the phase hologram representative of that perspective image is divided up longitudinally into a series of segments (S₀₀...S₀ₘ), which segments are respective holograms of the said horizontally extending elongate regions (DG₀...DGₘ) of that perspective image.

10. A method according to any one of claims 1 to 7, wherein the said different viewpoints are distributed two-dimensionally over the said hologram formation surface (34) so that the said reproductions form a multiplicity of small component portions (108) of the composite hologram, corresponding respectively to the said different viewpoints.

11. A method according to any preceding claim, further comprising the step of irradiating each of the composite holograms in turn with a light beam so as to generate an apparently moving stereoscopic image.

12. A method according to any preceding claim, wherein a liquid crystal panel device (130) is controlled to form each of the composite holograms in turn.

13. A method according to claim 12, wherein the liquid crystal panel device (130) is controlled, to form the composite holograms, by application of control voltages to electrodes (444, 446), mounted adjacent to a layer of liquid crystal (460) in the device, so as to bring about changes in the refractive index of the liquid crystal.

14. A method according to claim 12, wherein the liquid crystal panel device (146) includes a dielectric mirror (160), extending adjacent to a layer of liquid crystal (165) in the device, and a photoconductive layer (156) provided adjacent to the dielectric mirror (160), and is controlled, to form the composite holograms, by way of an auxiliary light beam (170) directed to be incident on the photoconductive layer (156) so as to bring about local changes in its resistivity.

15. An apparatus for producing computer-generated holograms for use in displaying a stereoscopic image of a three-dimensional object which moves so that its distance from a hologram formation surface (34) varies, the apparatus comprising:
coordinate-computing means (10) for computing, for each in turn of a succession of different instants (t₁, t₂...) in time, a three-dimensional coordinate representation of the object (30-1, 30-2...) as positioned at the instant concerned;
projection-plane defining means (12) for defining, for each in turn of the said different instants, a projection plane (32-1, 32-2...) at a location which varies with the object position in such a way that the distance (L₁, L₂ ...) between the object and the projection plane remains less than a preset limiting value (L₀);
image-computing means (16) for computing, for each in turn of the said different instants, a series of two-dimensional perspective images of the object as viewed respectively from an array of preselected different viewpoints, each such image representing the object as it would be seen projected onto the projection plane (32) defined for the instant concerned;
hologram-computing means (18) for computing, for each in turn of the said different instants, a set of phase holograms representative respectively, at the said hologram formation surface (34), of the perspective images of the series computed for the instant concerned; and
hologram-formation means (20) for producing, for each in turn of the said different instants, a composite hologram incorporating respective physical reproductions (10B) of the phase holograms of the set computed for the instant concerned, which reproductions (108) are arrayed similarly to their respectively corresponding different viewpoints so that the composite hologram can be irradiated with a light beam to generate the desired stereoscopic image (135) of the object as positioned at the instant concerned.

16. An apparatus according to claim 15, wherein the said projection-plane defining means operate in such a manner that each said projection plane (32) is defined so that it contains the centre of gravity of the computed three-dimensional coordinate representation of the said object at the instant concerned.

17. An apparatus for producing computer-generated holograms for use in displaying a stereoscopic image of a plurality of three-dimensional objects (36, 38, 40) which move so that their respective distances from a hologram formation surface (34) vary, the apparatus comprising:
coordinate-computing means for computing, for each in turn of a succession of different instants in time, respective three-dimensional coordinate representations of the objects as positioned at the instant concerned;
projection-plane defining means for defining, for each object individually as positioned at each in turn of the said different instants, a projection plane (32-1, 32-2, 32-3) at a location which varies with the object position in such a way that the distance between the object concerned and its individual projection plane remains less than a preset limiting value (L₀);
image-computing means for computing, for each in turn of the said different instants, a series of composite two-dimensional perspective images of the said objects as viewed respectively from an array of preselected different viewpoints, each such image representing each of the said objects as it would be seen projected onto the projection plane defined individually therefor in respect of the instant concerned;
hologram-computing means for computing, for each in turn of the said different instants, a set of phase holograms representative respectively, at the said hologram formation surface (34), of the composite perspective images of the series computed for the instant concerned; and
hologram-formation means for producing, for each in turn of the said different instants, a composite hologram incorporating respective physical reproductions (10B) of the phase holograms of the set computed for the instant concerned, which reproductions are arrayed similarly to their respectively corresponding different viewpoints so that the composite hologram can be irradiated with a light beam to generate the desired stereoscopic image of the objects as positioned at the instant concerned.

18. An apparatus according to claim 17, wherein the said projection-plane defining means operate in such a manner that each said projection plane (32) is defined so that it contains the centre of gravity of the computed three-dimensional coordinate representation of the object concerned at the instant concerned.

19. An apparatus according to claim 15, 16, 17 or 18, wherein the projection-plane defining means operate in such a manner that the said preset limiting value is set at a first magnitude when the distance of the object concerned from a preselected observation point (28) is within a first range of values but is set at a second magnitude, larger than the first magnitude, when that distance is within a second range of values that are larger than the values in the said first range.

20. An apparatus according to any one of claims 15 to 19, wherein the said preselected different viewpoints are distributed along a horizontal line, and wherein the said hologram-computing means operate in such a manner that the phase holograms of each such set are elongate, so that each composite hologram when arranged so that the said physical reproductions (A₀...Aₙ) have their longitudinal axes extending vertically, and when irradiated, provides an image giving an impression of parallax in the horizontal direction.

21. An apparatus according to claim 20, wherein the said hologram-computing means operate in such a manner that in the course of computing each set of phase holograms each of the perspective images (G₀, G₁, G₂...) of the series computed for the instant concerned is divided up, in the vertical direction, into horizontally extending elongate regions (DG₀...DGₘ) and the phase hologram representative of that perspective image is divided up longitudinally into a series of segments (S₀₀...S₀ₘ), which segments are respective holograms of the said horizontally extending elongate regions (DG₀...DGₘ) of that perspective image.

22. An apparatus according to any one of claims 15 to 19, wherein the preselected different viewpoints are distributed two-dimensionally over the said hologram formation surface (34) so that the said reproductions form a multiplicity of small component portions (108) of the composite hologram, corresponding respectively to the preselected different viewpoints.

23. An apparatus according to any one of claims 15 to 22, further comprising light source means (134, 136) for irradiating each of the composite holograms in turn with a light beam so as to generate an apparently moving stereoscopic image.

24. An apparatus according to any one of claims 15 to 23, wherein the said hologram-formation means comprise a liquid crystal panel device (130) controllable to form each of the composite holograms in turn.

25. An apparatus according to claim 24, wherein the liquid crystal panel device (130) is controllable, to form the composite holograms, by application of control voltages to electrodes (444, 446), mounted adjacent to a layer of liquid crystal (460) in the device, so as to bring about changes in the refractive index of the liquid crystal.

26. An apparatus according to claim 24, wherein the liquid crystal panel device (148) includes a dielectric mirror (160), extending adjacent to a layer of liquid crystal (165) in the device, and a photoconductive layer (156) provided adjacent to the dielectric mirror (160), and is controllable, to form the composite holograms, by way of an auxiliary light beam (170) directed to be incident on the photoconductive layer (156) so as to bring about local changes in its resistivity.

27. A method as claimed in any one of claims 1 to 14, or an apparatus as claimed in any one of claims 15 to 26, wherein each of the projection planes (32) is defined so as to be parallel to the said hologram formation surface (34).

## Patentansprüche

1. Verfahren zum Herstellen computergenerierter Hologramme zur Verwendung bei der Darstellung eines stereoskopischen Bildes von einem dreidimensionalen Objekt, welches sich so bewegt, daß seine Entfernung von einer Hologrammbildungsoberfläche (34) sich ändert, wobei das Verfahren für der Reihe nach jeden einer Aufeinanderfolge von verschiedenen Augenblicken (t₁, t₂,...) in der Zeit umfaßt:
Berechnen einer dreidimensionalen Koordinatendarstellung des Objektes (30-1, 30-2, ...), wie es in dem betrachteten Augenblick positioniert ist;
Definieren einer Projektionsebene (32-1, 32-2, ...) an einem Ort, welcher sich mit der Objektposition in einer solchen Weise ändert, daß die Entfernung (L₁, L₂ ...) zwischen dem Objekt und der Projektionsebene geringer bleibt als ein voreingestellter Begrenzungswert (L₀);
Berechnen einer Serie von zweidimensionalen perspektivischen Bildern des Objektes, wie es jeweils von einer Anordnung verschiedener Betrachtungspunkte aus gesehen wird, wobei ein jedes solches Bild das Objekt darstellt, wie es auf die Projektionsebene (32) projiziert gesehen würde, die für den betrachteten Augenblick definiert wurde;
Berechnen eines Satzes von Phasenhologrammen, der jeweils an der genannten Hologrammbildungsoberfläche (34) für die perspektivischen Bilder der Serie repräsentativ ist, die für den betrachteten Augenblick berechnet wurden; und
Erzeugen eines zusammengesetzten Hologramms, welches jeweilige physikalische Reproduktionen (108) der Phasenhologramme des Satzes einschließt, welcher für den betrachteten Augenblick berechnet wurde, wobei die Reproduktionen (108) ähnlich ihren jeweiligen entsprechenden unterschiedlichen Betrachtungspunkten so angeordnet sind, daß das zusammengesetzte Hologramm mit einem Lichtstrahl bestrahlt werden kann, um das gewünschte stereoskopische Bild (135) des Objektes zu generieren, wie es in dem betrachteten Augenblick positioniert ist.

2. Verfahren nach Anspruch 1, bei welchem jede Projektionsebene (32) so definiert ist, daß sie den Schwerpunkt der berechneten dreidimensionalen Koordinatendarstellung des Objektes in dem betrachteten Augenblick enthält.

3. Verfahren nach Anspruch 1 oder 2, bei welchem das Objekt ein zusammengesetztes Objekt ist, welches eine Vielzahl von getrennten Körpern (300, 302, 304) umfaßt.

4. Verfahren zum Erzeugen computergenerierter Hologramme für die Verwendung bei der Darstellung eines stereoskopischen Bildes von einer Vielzahl dreidimensionaler Objekte (36, 38, 40), die sich so bewegen, daß ihre jeweiligen Entfernungen von einer Hologrammbildungsoberfläche (34) sich ändern, wobei das Verfahren für der Reihe nach jeden von einer Aufeinanderfolge unterschiedlicher Augenblicke (t₁, t₂,...) in der Zeit umfaßt:
Berechnen jeweiliger dreidimensionaler Koordinatendarstellungen dieser Objekte (36, 38, 40), wie sie in dem betrachteten Augenblick positioniert sind;
Definieren einer Projektionsebene (32-1, 32-2, 32-3) individuell für jedes Objekt an einem Ort, welcher sich mit der Objektposition in einer solchen Weise ändert, daß die Entfernung zwischen dem betrachteten Objekt und seiner individuellen Projektionsebene geringer als ein voreingestellter Begrenzungswert (L₀) bleibt;
Berechnen einer Serie von zusammengesetzten zweidimensionalen perspektivischen Bildern dieses Objektes, wie es jeweils von einer Anordnung verschiedener Betrachtungspunkte aus gesehen wird, wobei ein jedes solches Bild jedes der Objekte repräsentiert, wie es auf die Projektionsebene projiziert gesehen würde, die individuell für dieses mit Bezug auf den betrachteten Augenblick definiert wurde;
Berechnen eines Satzes von Phasenhologrammen, der an der Hologrammbildungsoberfläche jeweils repräsentativ für die zusammengesetzten perspektivischen Bilder der Serie ist, welche für den betrachteten Augenblick berechnet wurden; und
Erzeugen eines zusammengesetzten Hologramms, welches jeweilige physikalische Reproduktionen (108) der Phasenhologramme des Satzes einschließt, welcher für den betrachteten Augenblick berechnet wurde, wobei die Reproduktionen (108) ähnlich ihren jeweiligen entsprechenden unterschiedlichen Betrachtungspunkte so angeordnet sind, daß das zusammengesetzte Hologramm mit einem Lichtstrahl bestrahlt werden kann, um das gewünschte stereoskopische Bild der Objekte zu generieren, wie sie in dem betrachteten Augenblick positioniert sind.

5. Verfahren nach Anspruch 4, bei welchem jede Projektionsebene (32-1, 32-2, 32-3) so definiert ist, daß sie den Schwerpunkt der berechneten dreidimensionalen Koordinatendarstellung des Objektes (36, 38, 40) enthält, welches in dem betrachteten Augenblick betrachtet wird.

6. Verfahren nach Anspruch 4 oder 5, bei welchem die Objekte jeweilige unterschiedliche Teile (70-1, 70-2, 70-3) eines einzelnen Körpers (70) sind.

7. Verfahren nach einem der vorangehenden Ansprüche, bei welchem der voreingestellte Begrenzungswert (L₀) bei einer ersten Größe eingestellt ist, der Abstand (Z) des betrachteten Objektes von einem vorgewählten Betrachtungspunkt (28) innerhalb eines ersten Wertebereiches liegt, jedoch bei einer zweiten Größe eingestellt wird, die größer als die erste Größe ist, wenn diese Entfernung (Z) innerhalb eines zweiten Bereiches von Werten liegt, die größer als die Werte in dem ersten Bereich sind.

8. Verfahren nach einem der vorangehenden Ansprüche, bei welchem die unterschiedlichen Betrachtungspunkte entlang einer horizontalen Linie verteilt sind, und bei welchem die Phasenhologramme eines jeden solchen Satzes länglich sind derart, daß jedes zusammengesetzte Hologramm dann, wenn es so angeordnet ist, daß die physikalischen Reproduktionen (A₀ ... Aₙ) vertikal sich erstreckende Längsachsen haben und wenn diese bestrahlt werden, ein Bild ergibt, das einen Eindruck einer Parallaxe in der horizontalen Richtung gibt.

9. Verfahren nach Anspruch 8, bei welchem in dem Verlauf des Berechnens eines jeden Satzes von Phasenhologrammen jedes der perspektivischen Bilder (G₀, G₁, G₂, ...) der für den betrachteten Augenblick berechneten Serie in der vertikalen Richtung in horizontal sich erstreckende längliche Regionen (DG₀ ... DG₀) geteilt wird, und das für dieses perspektivische Bild repräsentative Phasenhologramm längs in eine Reihe von Segmenten (S₀₀ ... S₀ₘ) geteilt wird, welche Segmente jeweilige Hologramme der horizontal sich erstreckenden länglichen Regionen (DG₀ ... DGₘ) dieses perspektivischen Bildes sind.

10. Verfahren nach einem der Ansprüche 1 bis 7, bei welchem die unterschiedlichen Betrachtungspunkte zweidimensional über die Hologrammbildungsoberfläche (34) so verteilt sind, daß die Reproduktionen eine Vielzahl von kleinen Komponentenabschnitten (108) des zusammengesetzten Hologrammes bilden, die jeweils den verschiedenen Betrachtungspunkten entsprechen.

11. Verfahren nach einem der vorangehenden Ansprüche, ferner umfassend den Schritt, jedes der zusammengesetzten Hologramme der Reihe nach mit einem Lichtstrahl so zu bestrahlen, daß ein offensichtlich sich bewegendes stereoskopisches Bild generiert wird.

12. Verfahren nach einem der vorangehenden Ansprüche, bei welchem eine Flüssigkristall-Tafeleinrichtung (130) so gesteuert wird, daß jedes der zusammengesetzten Hologramme der Reihe nach gebildet wird.

13. Verfahren nach Anspruch 12, bei welchem die Flüssigkristall-Tafeleinrichtung (130) zur Bildung der zusammengesetzten Hologramme durch Anlegen von Steuerspannungen an Elektroden (444, 446) gesteuert wird, die neben einer Schicht aus Flüssigkristall (460) in der Einrichtung angeordnet sind, um so Veränderungen beim Brechungsindex des Flüssigkristalls hervorzurufen.

14. Verfahren nach Anspruch 12, bei welchem die Flüssigkristall-Tafeleinrichtung (146) einen dielektrischen Spiegel (160) umfaßt, welcher sich neben einer Schicht von Flüssigkristall (165) in der Einrichtung erstreckt, und wobei eine fotoleitfähige Schicht (156) neben dem dielektrischen Spiegel (160) vorgesehen ist und so gesteuert wird, daß sie die zusammengesetzten Hologramme mittels eines Hilfslichtstrahles (170) bildet, welcher so ausgerichtet wird, daß er auf die lichtleitfähige Schicht (156) einfällt, um so örtliche Änderungen ihres spezifischen Widerstandes hervorzubringen.

15. Gerät zum Erzeugen computergenerierter Hologramme für die Verwendung bei der Darstellung eines stereoskopischen Bildes eines dreidimensionalen Objektes, welches sich so bewegt, daß seine Entfernung von einer Hologrammbildungsoberfläche (34) sich ändert, welches Gerät umfaßt:
Koordinatenberechnungsmittel (10), um für der Reihe nach jeden einer Aufeinanderfolge verschiedener Augenblicke (t₁, t₂, ...) in der Zeit eine dreidimensionale Koordinatendarstellung des Objektes (30-1, 30-2, ...) zu berechnen, wie es in dem betrachteten Augenblick positioniert ist;
Projektionsebenen-Definierungsmittel (12), um für der Reihe nach jeden der verschiedenen Augenblicke eine Projektionsebene (32-1, 32-2, ...) an einem Ort zu definieren, welcher sich mit der Objektposition in einer solchen Weise ändert, daß die Entfernung (L₁, L₂, ...) zwischen dem Objekt und der Projektionsebene kleiner als ein voreingestellter Begrenzungswert (L₀) bleibt;
Bildberechnungsmittel (16), um für der Reihe nach jeden der verschiedenen Augenblicke eine Serie von zweidimensionalen perspektivischen Bildern des Objektes zu berechnen, wie diese jeweils von einer Anordnung vorgewählter verschiedener Betrachtungspunkte aus gesehen werden, wobei ein jedes solches Bild das Objekt so darstellt, wie es auf die Projektionsebene (32) projiziert gesehen würde, die für den betrachteten Augenblick definiert wurde;
Hologrammberechnungsmittel (18), um für der Reihe nach jeden der verschiedenen Augenblicke einen Satz von Phasenhologrammen zu berechnen, der jeweils an der Hologrammbildungsoberfläche (34) repräsentativ für die perspektivischen Bilder der Serie ist, welche für den betrachteten Augenblick berechnet wurden; und
Hologrammbildungsmittel (20), um für der Reihe nach jeden der verschiedenen Augenblicke ein zusammengesetztes Hologramm zu erzeugen, welches jeweilige physikalische Reproduktionen (10B) der Phasenhologramme des Satzes einschließt, welcher für den betrachteten Augenblick berechnet wurde, wobei die Reproduktionen (108) ähnlich ihren jeweiligen entsprechenden unterschiedlichen Betrachtungspunkten so angeordnet sind, daß das zusammengesetzte Hologramm mit einem Lichtstrahl bestrahlt werden kann, um das gewünschte stereoskopische Bild (135) des Objektes zu generieren, wie es in dem betrachteten Augenblick positioniert ist.

16. Gerät nach Anspruch 15, bei welchem die Projektionsebenen-Definierungsmittel in einer solchen Weise arbeiten, daß jede Projektionsebene (32) so definiert wird, daß sie den Schwerpunkt der berechneten dreidimensionalen Koordinatendarstellung des Objektes in dem betrachteten Augenblick enthält.

17. Gerät zum Erzeugen computergenerierter Hologramme für die Verwendung bei der Darstellung eines stereoskopischen Bildes einer Vielzahl von dreidimensionalen Objekten (36, 38, 40), welche sich so bewegen, daß ihre jeweiligen Abstände von einer Hologrammbildungsoberfläche (34) sich ändern, wobei das Gerät umfaßt:
Koordinatenberechnungsmittel, um für der Reihe nach jeden einer Aufeinanderfolge verschiedener Augenblicke in der Zeit jeweilige dreidimensionale Koordinatendarstellungen der Objekte zu berechnen, wie sie in dem betrachteten Augenblick positioniert sind;
Projektionsebenen-Definierungsmittel, um für jedes Objekt, wie es der Reihe nach in jedem der verschiedenen Augenblicke positioniert ist, individuell eine Projektionsebene (32-1, 32-2, 32-3) an einer Stelle zu definieren, die sich mit der Objektposition in einer solchen Weise ändert, daß die Entfernung zwischen dem betrachteten Objekt und seiner individuellen Projektionsebene kleiner als ein voreingestellter Begrenzungswert (L₀) bleibt;
Bildberechnungsmittel, um der Reihe nach für jeden der verschiedenen Augenblicke eine Serie zusammengesetzter zweidimensionaler perspektivischer Bilder dieses Objektes zu berechnen, wie es jeweils von einer Anordnung voreingestellter verschiedener Betrachtungspunkte aus gesehen wird, wobei ein jedes solches Bild jedes dieser Objekte repräsentiert, wie es auf die Projektionsebene projiziert gesehen würde, die individuell für dieses mit Bezug auf den betrachteten Augenblick definiert wurde;
Hologrammberechnungsmittel, um für der Reihe nach jeden der verschiedenen Augenblicke einen Satz von Phasenhologrammen zu berechnen, der jeweils an der Hologrammbildungsoberfläche (34) repräsentativ für die zusammengesetzten perspektivischen Bilder der Serie ist, die für den betrachteten Augenblick berechnet wurden; und
Hologrammbildungsmittel, um für der Reihe nach jeden der verschiedenen Augenblicke ein zusammengesetztes Hologramm zu erzeugen, welches jeweilige physikalische Reproduktionen (10B) der Phasenhologramme des Satzes einschließt, welcher für den betrachteten Augenblick berechnet wurde, wobei die Reproduktionen ähnlich ihren jeweiligen entsprechenden verschiedenen Betrachtungspunkten so angeordnet sind, daß das zusammengesetzte Hologramm mit einem Lichtstrahl bestrahlt werden kann, um das gewünschte stereoskopische Bild des Objektes zu generieren, wie es in dem betrachteten Augenblick positioniert ist.

18. Gerät nach Anspruch 17, bei welchem die Projektionsebenen-Definierungsmittel in einer solchen Weise arbeiten, daß eine jede Projektionsebene (32) so definiert wird, daß sie den Schwerpunkt der berechneten dreidimensionalen Koordinatendarstellung des in dem betrachteten Augenblick betrachteten Objektes enthält.

19. Gerät nach Anspruch 15, 16, 17 oder 18, bei welchem die Projektionsebenen-Definierungsmittel in einer solchen Weise arbeiten, daß der voreingestellte Begrenzungswert bei einer ersten Größe eingestellt wird, wenn die Entfernung des betrachteten Objektes von einem vorgewählten Betrachtungspunkt (28) aus innerhalb eines ersten Wertebereiches liegt, jedoch bei einer zweiten Größe eingestellt wird, die größer als die erste Größe ist, wenn diese Entfernung innerhalb eines zweiten Bereiches von Werten liegt, die größer als die Werte in dem ersten Bereich sind.

20. Gerät nach einem der Ansprüche 15 bis 19, bei welchem die vorgewählten verschiedenen Betrachtungspunkte entlang einer horizontalen Linie verteilt sind, und bei welchem die Hologrammberechnungsmittel in einer solchen Weise arbeiten, daß die Phasenhologramme eines jeden solchen Satzes länglich sind, so daß jedes zusammengesetzte Hologramm, wenn es so angeordnet ist, daß die physikalischen Reproduktionen (A₀ ... Aₙ) vertikal sich erstreckende Längsachsen haben und wenn diese bestrahlt werden, ein Bild ergeben, das einen Eindruck einer Parallaxe in der horizontalen Richtung gibt.

21. Gerät nach Anspruch 20, bei welchem die Hologrammberechnungsmittel in einer solchen Weise arbeiten, daß im Verlaufe der Berechnung eines jeden Satzes von Phasenhologrammen jedes der perspektivischen Bilder (G₀, G₁, G₂, ...) der für den betrachteten Augenblick berechneten Serie in der vertikalen Richtung in horizontal sich erstreckende längliche Regionen (DG₀ ... DGₘ) aufgeteilt wird, und daß das für dieses perspektivische Bild repräsentative Phasenhologramm längs in eine Serie von Segmenten (S₀₀ ... S₀ₘ) aufgeteilt wird, wobei die Segmente jeweilige Hologramme der horizontal sich erstreckenden länglichen Regionen (DG₀ ... DGₘ) dieses perspektivischen Bildes sind.

22. Gerät nach einem der Ansprüche 15 bis 19, bei welchem die vorgewählten verschiedenen Betrachtungspunkte zweidimensional über die Hologrammbildungsoberfläche (34) so verteilt sind, daß die Reproduktionen eine Vielzahl von kleinen Komponentenabschnitten (108) des zusammengesetzten Hologramms bilden, die jeweils den vorgewählten verschiedenen Betrachtungspunkten entsprechen.

23. Gerät nach einem der Ansprüche 15 bis 22, ferner umfassend Lichtquellenmittel (134, 136) zum Bestrahlen jedes der zusammengesetzten Hologramme der Reihe nach mit einem Lichtstrahl derart, daß ein offensichtlich sich bewegendes stereoskopisches Bild generiert wird.

24. Gerät nach einem der Ansprüche 15 bis 23, bei welchem die Hologrammbildungsmittel eine Flüssigkristall-Tafeleinrichtung (130) umfassen, die so steuerbar ist, daß der Reihe nach jedes der zusammengesetzten Hologramme gebildet wird.

25. Gerät nach Anspruch 24, bei welchem die Flüssigkristall-Tafeleinrichtung (130) so steuerbar ist, daß die zusammengesetzten Hologramme durch Anlegen von Steuerspannungen an Elektroden (444, 446) gebildet werden, die neben einer Schicht von Flüssigkristall (460) in der Einrichtung angeordnet sind, um Änderungen in dem Brechungsindex des Flüssigkristalls hervorzubringen.

26. Gerät nach Anspruch 24, bei welchem die Flüssigkristall-Tafeleinrichtung (148) einen dielektrischen Spiegel (160) umfaßt, welcher sich neben einer Schicht von Flüssigkristall (165) in der Einrichtung erstreckt, sowie eine lichtleitfähige Schicht (156), die neben dem dielektrischen Spiegel (160) vorgesehen ist und die so steuerbar ist, daß die zusammengesetzten Hologramme mittels eines Hilfslichtstrahles (170) gebildet werden, welcher so ausgerichtet wird, daß er auf die lichtleitfähige Schicht (156) einfällt, um örtliche Änderungen in deren spezifischem Widerstand hervorzubringen.

27. Verfahren nach einem der Ansprüche 1 bis 14, oder Gerät, wie in einem der Ansprüche 15 bis 26 beansprucht, bei welchem jede der Projektionsebenen (32) so definiert ist, daß sie parallel zu der Hologrammbildungsoberfläche (34) liegt.

## Revendications

1. Procédé de production d'hologrammes créés par ordinateur et destinés à être utilisés pour l'affichage d'une image stéréoscopique d'un objet tridimensionnel qui se déplace afin que sa distance à une surface (34) de formation d'hologramme varie, le procédé comprenant, pour chaque instant successif d'une série d'instants différents (t₁, t₂, ...) :
le calcul d'une représentation en coordonnées tridimensionnelles de l'objet (30-1, 30-2,...) positionné à l'instant concerné,
la définition d'un plan de projection (32-1, 32-2,...) à un emplacement qui varie avec la position de l'objet de manière que la distance (L₁, L₂,...) comprise entre l'objet et le plan de projection soit inférieur à une valeur limite préréglée (L₀),
le calcul d'une série d'images bidimensionnelles en perspective de l'objet vu respectivement à partir d'un arrangement de points de vue différents, chaque image représentant l'objet tel qu'il serait vu en projection sur le plan de projection (32) défini pour l'instant concerné,
le calcul d'un ensemble d'hologrammes de phase représentatifs respectivement, à la surface (34) de formation d'hologramme, des images en perspective de la série calculée pour l'instant concerné, et
la production d'un hologramme composite comprenant des reproductions physiques respectives (108) des hologrammes de phase de l'ensemble calculé pour l'instant concerné, ces reproductions (108) ayant une disposition analogue à celle des points de vue différents correspondants respectivement afin que l'hologramme composite puisse être éclairé par un faisceau lumineux pour la création de l'image stéréoscopique voulue (135) de l'objet positionné à l'instant concerné.

2. Procédé selon la revendication 1, dans lequel chaque plan de projection (32) est défini de manière qu'il contienne le centre de gravité de la représentation calculée en coordonnées tridimensionnelles de l'objet à l'instant concerné.

3. Procédé selon la revendication 1 ou 2, dans lequel l'objet est un objet composite, comprenant plusieurs corps séparés (300, 302, 304).

4. Procédé de production d'hologrammes créés par ordinateur et destinés à être utilisés pour l'affichage d'une image stéréoscopique de plusieurs objets tridimensionnels (36, 38, 40) qui se déplacent de manière que leurs distances respectives à une surface (34) de formation d'hologramme varient, le procédé comprenant, pour chaque instant successif d'une série d'instants différents (t₁, t₂, ...) :
le calcul de représentations respectives en coordonnées tridimensionnelles des objets (36, 38, 40) positionnés à l'instant concerné,
la définition, pour chaque objet individuellement, d'un plan de projection (32-1, 32-2, 32-3) à un emplacement qui varie avec la position de l'objet de manière que la distance comprise entre l'objet concerné et son plan individuel de projection reste inférieure à une valeur limite préréglée (L₀),
le calcul d'une série d'images bidimensionnelles composites en perspective des objets vus respectivement à partir de tout un arrangement de points de vue différents, chaque image représentant chacun des objets tel qu'il serait vu en projection sur le plan de projection défini individuellement à cet effet pour l'instant concerné,
le calcul d'un ensemble d'hologrammes de phase représentatifs respectivement, à ladite surface de formation d'hologramme, des images composites en perspective de la série calculée pour l'instant concerné, et
la production d'un hologramme composite incorporant des reproductions physiques respectives (108) des hologrammes de phase de l'ensemble calculé pour l'instant concerné, ces reproductions (108) ayant un arrangement analogue à celui des points de vue différents correspondant respectivement afin que l'hologramme composite puisse être éclairé par un faisceau lumineux pour la création de l'image stéréoscopique voulue des objets, positionnés à l'instant concerné.

5. Procédé selon la revendication 4, dans lequel chaque plan de projection (32-1, 32-2, 32-3) est défini de manière qu'il contienne le centre de gravité de la représentation calculée en coordonnées tridimensionnelles de l'objet (36, 38, 40) concerné à l'instant concerné.

6. Procédé selon la revendication 4 ou 5, dans lequel les objets sont des parties différentes respectives (70-1, 70-2, 70-3) d'un corps unique (70).

7. Procédé selon l'une quelconque des revendications précédentes, dans lequel la valeur limite préréglée (L₀) est réglée à une première amplitude lorsque la distance (Z) de l'objet concerné à un point prédéterminé d'observation (28) se trouve dans une première plage de valeurs, mais est réglée à une seconde amplitude supérieure à la première amplitude lorsque cette distance (Z) se trouve dans une seconde plage de valeurs qui sont supérieures aux valeurs de la première plage.

8. Procédé selon l'une quelconque des revendications précédentes, dans lequel les points de vue différents sont distribués le long d'une droite horizontale, et dans lequel les hologrammes de phase de chaque ensemble sont allongés si bien que chaque hologramme composite, lorsqu'il est disposé de manière que les reproductions physiques (A₀...Aₙ) et leurs axes longitudinaux sont placés verticalement et lors d'une irradiation, forme une image donnant une impression de parallaxe dans la direction horizontale.

9. Procédé selon la revendication 8, dans lequel, au cours du calcul de chaque ensemble d'hologrammes de phase, chacune des images (G₀, G₁, G₂,...) en perspective de la série calculée pour l'instant concerné est divisée, en direction verticale, en régions allongées disposées horizontalement (DG₀,...DG₀), et l'hologramme de phase représentatif de cette image en perspective est divisé longitudinalement en une série de segments (S₀₀,...S₀ₘ), ces segments étant des hologrammes respectifs des régions allongées disposées horizontalement (DG₀,...DGₘ) de cette image en perspective.

10. Procédé selon l'une quelconque des revendications 1 à 7, dans lequel les points de vue différents sont distribués bidimensionnellement sur la surface (34) de formation d'hologramme afin que les reproductions forment plusieurs petites parties constituantes (108) de l'hologramme composite, correspondant respectivement aux points de vue différents.

11. Procédé selon l'une quelconque des revendications précédentes, comprenant en outre une étape d'irradiation de chacun des hologrammes composites tour à tour par un faisceau lumineux pour la création d'une image stéréoscopique qui semble se déplacer.

12. Procédé selon l'une quelconque des revendications précédentes, dans lequel un dispositif à panneau à cristaux liquides (130) est commandé pour la formation de chacun des hologrammes composites à son tour.

13. Procédé selon la revendication 12, dans lequel le dispositif (130) à panneau à cristaux liquides est commandé afin qu'il forme des hologrammes composites par application de tensions de commande à des électrodes (444, 446) montées près d'une couche de matière cristalline liquide (460) dans le dispositif, si bien que des changements d'indice de réfraction de matière cristalline liquide sont assurés.

14. Procédé selon la revendication 12, dans lequel le dispositif (146) à panneau à cristaux liquides contient un miroir diélectrique (160) qui est adjacent à une couche de matière cristalline liquide (165) du dispositif, et une couche photoconductrice (156) qui est adjacente au miroir diélectrique (160) et qui est commandée pour la formation des hologrammes composites, à l'aide d'un faisceau lumineux auxiliaire (170) dirigé afin qu'il tombe sur la couche photoconductrice (156), de manière que des changements locaux de résistivité soient provoqués.

15. Appareil de production d'hologrammes créés sur ordinateur, destinés à être utilisés pour l'affichage d'une image stéréoscopique d'un objet tridimensionnel qui se déplace afin que sa distance à une surface (34) de formation d'hologramme varie, l'appareil comprenant :
un dispositif (10) de calcul de coordonnées destiné à calculer, pour chaque instant successif d'une série d'instants différents (t₁, t₂,...), une représentation en coordonnées tridimensionnelles de l'objet (30-1, 30-2,...) positionné à l'instant concerné,
un dispositif (12) de définition de projection plane destiné à définir, pour chaque instant successif des instants différents, un plan de projection (32-1, 32-2,...) à un emplacement qui varie avec la position de l'objet de manière que la distance (L₁, L₂,...) comprise entre l'objet et le plan de projection reste inférieure à une valeur limite préréglée (L₀),
un dispositif (16) de calcul d'image destiné à calculer, pour chaque instant successif des instants différents, une série d'images bidimensionnelles en perspective de l'objet vu respectivement à partir d'un arrangement de points de vue différents prédéterminés, chaque image représentant l'objet tel qu'il serait vu en projection sur le plan de projection (32) défini pour l'instant concerné,
un dispositif (18) de calcul d'hologramme destiné à calculer, pour chaque instant successif des instants différents, un ensemble d'hologrammes de phase représentatifs respectivement, à la surface (34) de formation d'hologramme, des images en perspective de la série calculée pour l'instant concerné, et
un dispositif (20) de formation d'hologramme destiné à produire, pour chaque instant successif des instants différents, un hologramme composite incorporant des reproductions physiques respectives (10B) des hologrammes de phase de l'ensemble calculé pour l'instant concerné, ces reproductions (108) étant arrangées de la même manière que les points de vue différents correspondants respectivement afin que l'hologramme composite puisse être éclairé par un faisceau lumineux pour la création de l'image stéréoscopique voulue (135) de l'objet positionné à l'instant concerné.

16. Appareil selon la revendication 15, dans lequel le dispositif de définition de plan de projection fonctionne de manière que chaque plan de projection (32) soit défini comme contenant le centre de gravité de la représentation calculée en coordonnées tridimensionnelles de l'objet à l'instant concerné.

17. Appareil de production d'hologrammes créés par ordinateur destinés à être utilisés pour l'affichage d'une image stéréoscopique de plusieurs objets tridimensionnels (36, 38, 40) qui se déplacent afin que leur distance respective à une surface (34) de formation d'hologramme varie, l'appareil comprenant :
un dispositif de calcul de coordonnées destiné à calculer, pour chaque instant successif d'une série d'instants différents, des représentations respectives en coordonnées tridimensionnelles des objets positionnés à l'instant concerné,
un dispositif de définition de plan de projection destiné à définir, pour chaque objet individuellement positionné à chaque instant successif des instants différents, un plan de projection (32-1, 32-2, 32-3), un emplacement qui varie avec la position de l'objet de manière que la distance comprise entre l'objet concerné et son plan individuel de projection reste inférieure à une valeur limite préréglée (L₀),
un dispositif de calcul d'image destiné à calculer, pour chaque instant successif des instants différents, une série d'images bidimensionnelles composites en perspective des objets vus respectivement d'un arrangement de différents points de vue prédéterminés, chaque image représentant chacun des objets tel qu'il serait vu en projection sur le plan de projection défini individuellement pour l'instant concerné,
un dispositif de calcul d'hologramme destiné à calculer, pour chaque instant successif des instants différents, un ensemble d'hologrammes de phase représentatifs respectivement, à la surface (34) de formation d'hologramme, des images composites en perspective de la série calculée pour l'instant concerné, et
un dispositif de formation d'hologrammes destiné à produire, pour chaque instant successif des instants différents, un hologramme composite incorporant des reproductions physiques respectives (10B) des hologrammes de phase de l'ensemble calculé pour l'instant concerné, les reproductions étant arrangées de la même manière que les points de vue différents correspondants respectivement si bien que l'hologramme composite peut être éclairé par un faisceau lumineux pour la création de l'image stéréoscopique voulue des objets positionnés à l'instant concerné.

18. Appareil selon la revendication 17, dans lequel le dispositif destiné à définir le plan de projection fonctionne d'une manière telle que chaque plan de projection (32) est défini comme contenant le centre de gravité de la représentation calculée en coordonnées tridimensionnelles de l'objet concerné à l'instant concerné.

19. Appareil selon la revendication 15, 16, 17 ou 18, dans lequel le dispositif destiné à définir le plan de projection fonctionne de manière que la valeur limite préréglée soit réglée à une première amplitude lorsque la distance de l'objet concerné à un point prédéterminé d'observation (28) se trouve dans une première plage de valeurs, mais soit réglée à une seconde amplitude, supérieure à la première, lorsque cette distance est comprise dans une seconde plage de valeurs qui sont plus grandes que les valeurs de la première plage.

20. Appareil selon l'une quelconque des revendications 15 à 19, dans lequel les points de vue différents prédéterminés sont distribués le long d'une droite horizontale, et dans lequel le dispositif de calcul d'hologramme fonctionne de manière que les hologrammes de phase de chaque ensemble soient allongés, si bien que chaque hologramme composite, lorsqu'il est disposé de manière que les représentations physiques (A₀,...Aₙ) aient des axes longitudinaux placés verticalement et lors de son irradiation, forme une image qui donne une impression de parallaxe en direction horizontale.

21. Appareil selon la revendication 20, dans lequel le dispositif de calcul d'hologramme fonctionne d'une manière telle que, pendant le calcul de chaque ensemble d'hologrammes de phase, chaque image en perspective (G₀, G₁, G₂,...) de la série calculée pour l'instant concerné est divisé, en direction verticale, en régions allongées horizontalement (DG₀,... DGₘ), et l'hologramme de phase représentatif de cette image en perspective est divisé longitudinalement en une série de segments (S₀₀,...S₀ₘ), ces segments étant des hologrammes respectifs des régions allongées disposées horizontalement (DG₀,...DGₘ) de cette image en perspective.

22. Appareil selon l'une quelconque des revendications 15 à 19, dans lequel les points de vue différents prédéterminés sont distribués bidimensionnellement sur la surface (34) de formation d'hologramme afin que les reproductions forment de multiples petites parties constituantes (108) de l'hologramme composite, correspondant respectivement aux points de vue différents prédéterminés.

23. Appareil selon l'une quelconque des revendications 15 à 22, comprenant en outre un dispositif à source lumineuse (134, 136) destiné à irradier chacun des hologrammes composites tour à tour par un faisceau lumineux pour la création d'une image stéréoscopique qui paraît se déplacer.

24. Appareil selon l'une quelconque des revendications 15 à 21, dans lequel le dispositif de formation d'hologrammes comporte un dispositif (130) à panneau à cristaux liquides qui peut être commandé pour la formation de chacun des hologrammes composites successivement.

25. Appareil selon la revendication 24, dans lequel le dispositif (130) à panneau à cristaux liquides peut être commandé afin qu'il forme les hologrammes composites par application de tensions de commande à des électrodes (444, 446) qui sont montées près d'une couche d'une matière à cristaux liquides (460) dans le dispositif, afin que des changements d'indice de réfraction de la matière cristalline liquide soient provoqués.

26. Appareil selon la revendication 24, dans lequel le dispositif à panneau à cristaux liquides (148) comporte un miroir diélectrique (160) disposé afin qu'il soit adjacent à une couche de matière cristalline liquide (165) du dispositif, et une couche photoconductrice (156) adjacente au miroir diélectrique (160), et il peut être commandé, pour la formation des hologrammes composites, par un faisceau lumineux auxiliaire (170) dirigé afin qu'il tombe sur la couche photoconductrice (156) et provoque des changements locaux de sa résistivité.

27. Procédé selon l'une quelconque des revendications 1 à 14, ou appareil selon l'une quelconque des revendications 15 à 26, dans lequel chacun des plans de projection (32) est défini afin qu'il soit parallèle à la surface (34) de formation d'hologramme.
